# EUROPEAN PATENT APPLICATION

(11) **EP 4 730 594 A1**
(43) Date of publication of application: **22.04.2026**
(21) Application number: 24823240.7
(22) Date of filing: 30.05.2024
(51) Int. Cl.: H02J 7/00, H02M 7/48

(54) **POWER CONVERSION DEVICE AND PROGRAM**

(30) Priority: 16.06.2023 JP 2023099577
(71) Applicant: DENSO CORPORATION, Kariya-city, Aichi 448-8661 (JP)
(72) Inventor: KURACHI, Taisuke, Kariya-city, Aichi 448-8661 (JP); KAZAOKA, Ryoya, Kariya-city, Aichi 448-8661 (JP); TOYAMA, Keisuke, Kariya-city, Aichi 448-8661 (JP); SASAMA, Yuta, Kariya-city, Aichi 448-8661 (JP)
(74) Representative: TBK
(86) International application number: PCT/JP2024/019897
(87) International publication number: WO 2024/257620

(57) **Abstract**

A power conversion apparatus includes: a transformer circuit (11, 20, 73, 111, 120A, 120B, 240) that transforms a direct-current output voltage of a supply-source power storage unit that is either of a first power storage unit (31, 131, 231) and a second power storage unit (32, 132, 232), and supplies the transformed direct-current voltage to a supply-destination power storage unit that is the other power storage unit; a command value calculation unit that calculates a command value (Ich1, Ich2, Idis1, Idis2) of a current flowing to at least either of the supply-source power storage unit and the supply-destination power storage unit; and a circuit control unit that performs switching control of the transformer circuit based on the calculated command value. The command value calculation unit calculates the command value based on an upper-limit output value that is either of an upper-limit output power and an upper-limit output current of the supply-source power storage unit, and an upper-limit input value that is either of an upper-limit input power and an upper-limit output current of the supply-destination power storage unit.

## Description

### [Cross-Reference to Related Application]

The present application is based on and claims the benefit of priority from Japanese Patent Application No. 2023-099577, filed on June 16, 2023, the description of which is incorporated herein by reference.

### [Technical Field]

The present disclosure relates to a power conversion apparatus and a program.

### [Background Art]

Conventionally, a power conversion apparatus applicable to a system including a first power storage unit and a second power storage unit is known. The power conversion apparatus includes a transformer circuit that transforms a direct-current output voltage of a supply-source power storage unit that is either of the first power storage unit and the second power storage unit and supplies the transformed direct-current voltage to a supply-destination power storage unit that is the other power storage unit. Here, for example, an apparatus described in PTL 1 is such a power conversion apparatus.

### [Citation List]

### [Patent Literature]

[PTL 1] JP 2011-018532 A

### [Summary]

In the above-described power conversion apparatus, a technology that is capable of suppressing power of at least either of the first and second power storage units from exceeding an upper-limit power is desired.

A main object of the present disclosure is to provide a power conversion apparatus that is capable of suppressing power of at least either of first and second power storage units from exceeding an upper-limit power, and a program.

The present disclosure provides a power conversion apparatus applicable to a system including a first power storage unit and a second power storage unit, the power conversion apparatus including: a transformer circuit that transforms a direct-current output voltage of a supply-source power storage unit that is either of the first power storage unit and the second power storage unit, and supplies the transformed direct-current voltage to a supply-destination power storage unit that is the other power storage unit; a command value calculation unit that calculates a command of a current flowing to at least either of the supply-source power storage unit and the supply-destination power storage unit; and a circuit control unit that performs switching control of the transformer circuit based on the calculated command value.

The command value calculation unit calculates the command value based on an upper-limit output value that is either of an upper-limit output power and an upper-limit output current of the supply-source power storage unit, and an upper-limit input value that is either of an upper-limit input power and an upper-limit output current of the supply-destination power storage unit.

As a result of the power conversion apparatus of the present disclosure using such a calculation method for the command value, the power of at least either of the first and second power storage units exceeding the upper-limit power can be suppressed.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is an overall configuration diagram illustrating a system according to a first embodiment;
Fig. 2 is a diagram illustrating a control state of switches during high-voltage charging;
Fig. 3 is a diagram illustrating a control state of the switches during low-voltage charging;
Fig. 4 is a functional block diagram illustrating a battery ECU and an EVECU;
Fig. 5 is a flowchart illustrating steps in an external charging control process;
Fig. 6 is a timing chart illustrating an external charging control mode;
Fig. 7 is a timing chart illustrating an external charging control mode in a comparative example;
Fig. 8 is a flowchart illustrating steps in an external charging control process according to a second embodiment;
Fig. 9 is a flowchart illustrating steps in a proportion setting process;
Fig. 10 is a timing chart illustrating an external charging control mode;
Fig. 11 is a diagram illustrating a control state of switches during high-voltage power supply according to a third embodiment;
Fig. 12 is a diagram illustrating a control state of the switches during low-voltage power supply;
Fig. 13 is a functional block diagram illustrating a battery ECU and an EVECU;
Fig. 14 is a flowchart illustrating steps in an external power supply control process;
Fig. 15 is a flowchart illustrating steps in an external power supply control process according to a fourth embodiment;
Fig. 16 is a flowchart illustrating steps in a proportion setting process;
Fig. 17 is a diagram illustrating a control state of switches during equalization control according to a fifth embodiment;
Fig. 18 is a flowchart illustrating steps in an equalization control process;
Fig. 19 is an overall configuration diagram illustrating a system according to a sixth embodiment;
Fig. 20 is a diagram of a control state of switches during high-voltage charging;
Fig. 21 is a diagram illustrating a control state of the switches during low-voltage charging;
Fig. 22 is a flowchart illustrating steps in an external charging control process;
Fig. 23 is a flowchart illustrating steps in an external charging control process according to a seventh embodiment;
Fig. 24 is a flowchart illustrating steps in a proportion setting process;
Fig. 25 is a diagram illustrating a control state of switches during high-voltage power supply according to an eighth embodiment;
Fig. 26 is a diagram illustrating a control state of the switches during low-voltage power supply;
Fig. 27 is a flowchart illustrating steps in an external power supply control process;
Fig. 28 is a flowchart illustrating steps in an external power supply control process according to a ninth embodiment;
Fig. 29 is a flowchart illustrating steps in a proportion setting process;
Fig. 30 is a diagram illustrating a control state of switches during equalization control according to a tenth embodiment;
Fig. 31 is a flowchart illustrating steps in an equalization control process;
Fig. 32 is a functional block diagram illustrating a battery ECU and an EVECU according to another embodiment;
Fig. 33 is a functional block diagram illustrating a battery ECU and an EVECU according to another embodiment;
Fig. 34 is an overall configuration diagram illustrating a system according to another embodiment;
Fig. 35 is an overall configuration diagram illustrating a system according to another embodiment; and
Fig. 36 is an overall configuration diagram illustrating a system according to another embodiment.

### [Description of Embodiments]

A plurality of embodiments will be described with reference to the drawings. According to the plurality of embodiments, functionally and/or structurally corresponding sections and/or associated sections may be given the same reference numbers or references numbers having differing digits in the hundreds place and higher. Descriptions according to other embodiments can be referenced for corresponding sections and/or associated sections.

### <First embodiment>

A first embodiment actualizing a power conversion apparatus of the present disclosure will hereinafter be described with reference to the drawings. The power conversion apparatus according to the present embodiment is mounted in a vehicle such as an electric car or a hybrid car, and configures an onboard system.

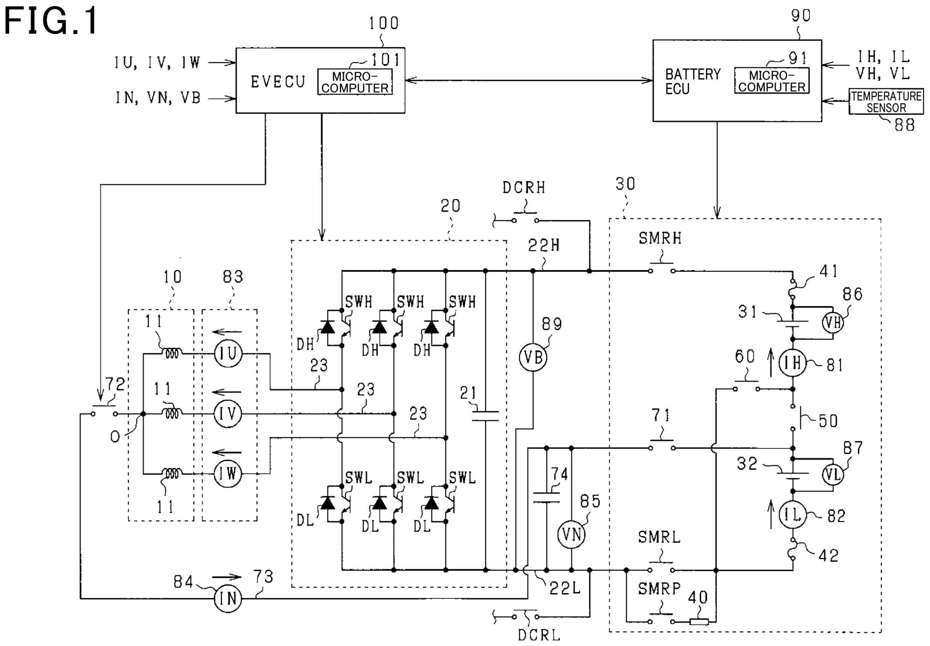

As shown in Fig. 1, the power conversion apparatus includes a motor 10, an inverter 20, a high-potential-side path 22H, and a low-potential-side path 22L. The motor 10 is a three-phase synchronous motor including U-, V-, and W-phase armature windings 11 that have a star connection, and a rotor (not shown). The armature windings 11 of the phases are arranged such as to be shifted from each other by an electrical angle of 120°. For example, the motor 10 may be a permanent-magnet synchronous motor. The rotor is capable of transmitting power to and from a drive wheel of a vehicle. Therefore, the motor 10 serves as a source of torque generation to make the vehicle travel.

The inverter 20 includes a series connection body composed of an upper arm switch SWH and a lower arm switch SWL for each of the three phases. An upper arm diode DH that is a freewheeling diode is connected in reverse parallel to the upper arm switch SWH. A lower arm diode DL that is a freewheeling diode is connected in reverse parallel to the lower arm switch SWL. According to the present embodiment, the switches SWH and SWL are insulated-gate bipolar transistors (IGBT).

The inverter 20 includes a smoothing capacitor 21. A high-potential-side path 22H having an elongated shape is connected to a high-potential-side terminal of the smoothing capacitor 21. A low-potential-side path 22L having an elongated shape is connected to a low-potential-side terminal of the smoothing capacitor 21. For example, the high-potential-side path 22H and the low-potential-side path 22L may be electrical paths of a busbar. Here, the smoothing capacitor 21 may be provided outside the inverter 20.

In each phase, a first end of the armature winding 11 is connected to a connection point between an emitter that is a low-potential-side terminal of the upper arm switch SWH and a collector that is a high-potential-side terminal of the lower arm switch SWL, with a conductive member 23 such as a bus bar therebetween. Second ends of the armature windings 11 of the phases are connected to one another by a neutral point O. Here, according to the present embodiment, the armature windings 11 of the phases are set to have a same number of turns. As a result, for example, the armature windings 11 of the phases may be set to have a same inductance.

The high-potential-side path 22H is connected to the collector of the upper arm switch SWH of each phase. The low-potential-side path 22L is connected to the emitter of the lower arm switch SWL of each phase.

The system includes a first storage battery 31 (corresponding to a "first power storage unit") and a second storage battery 32 (corresponding to a "second power storage unit"). The storage batteries 31 and 32 serve as a source of power supply to rotatably drive the rotor of the motor 10. Each storage battery 31 and 32 is an assembled battery including a series connection body composed of a plurality of unit batteries. A unit battery is a single battery cell or a series connection body composed of a plurality of battery cells. According to the present embodiment, a full-charge capacity (specifically, a rated full-charge capacity, for example) [Ah] of each unit battery configuring the first storage battery 31 and the second storage battery 32 is the same. A positive electrode terminal of the first storage battery 31 is connected to the high-potential-side path 22H with a first fuse 41 therebetween. A negative electrode terminal of the second storage battery 32 is connected to the low-potential-side path 22L with a second fuse 42 therebetween. For example, a terminal voltage (such as a rated voltage) of each battery cell configuring the assembled battery maybe set to be the same as one another. For example, the battery cell may be a secondary battery such as a lithium-ion battery. According to the present embodiment, an inter-terminal voltage (such as a rated voltage) of the first storage battery 31 is higher than a terminal voltage (such as a rated voltage) of the second storage battery 32. For example, this configuration can be actualized by a number of unit batteries configuring the first storage battery 31 being greater than a number of unit batteries configuring the second storage battery 32.

The power conversion apparatus includes a main switch for electrically connecting or disconnecting between the first and second storage batteries 31 and 32 and the inverter 20. Specifically, as the main switch, a high-potential-side main switch SMRH, a low-potential-side main switch SMRL, and a pre-charge main switch SMRP are provided. According to the present embodiment, the main switches SMRH, SMRL, and SMRP are mechanical relays. The main switches SMRH, SMRL, and SMRP inhibit bidirectional current flow when turned off and allow bidirectional current flow when turned on. The high-potential-side main switch SMRH is provided on the high-potential-side path 22H. The low-potential-side main switch SMRL is provided on the low-potential-side path 22L. A series connection body composed of the pre-charge main switch SMRP and a pre-charge resistor 40 is connected in parallel to the low-potential-side main switch SMRL. Here, the main switches SMRH, SMRL, and SMRP are not limited to mechanical relays and, for example, may be semiconductor switching elements.

The storage batteries 31 and 32 are capable of being charged from an external charger provided outside the vehicle, through external charging control. For example, the external charger may be a stationary-type charger.

Power can be supplied from the storage batteries 31 and 32 to a power supply target outside the vehicle, through external power supply control. The external power supply control in a case in which the power supply target is a grid power supply is also referred to as V2G (Vehicle to Grid). In addition, the external power supply control in a case in which the power supply target is electrical equipment of a building such as a residence is also referred to as V2H (Vehicle to Home).

The power conversion apparatus includes a high-potential-side connection switch DCRH and a low-potential-side connection switch DCRL for electrically connecting or disconnecting between the external charger or the power supply target, and the first and second storage batteries 31 and 32. According to the present embodiment, the connection switches DCRH and DCRL are mechanical relays. The connection switches DCRH and DCRL inhibit bidirectional current flow when turned off and allow bidirectional current flow when turned on. The high-potential-side connection switch DCRH is provided in a portion of the high-potential-side path 22H further toward the inverter 20 side than the high-potential-side main switch SMRH. The low-potential-side connection switch DCRL is provided in a portion of the low-potential-side path 2L further toward the inverter 20 side than the low-potential-side main switch SMRL. Here, the connection switches DCRH and DCRL are not limited to mechanical relays and, for example, may be semiconductor switching elements.

The power conversion apparatus includes an inter-battery switch 50 (corresponding to an "inter-power storage unit switch"), a bypass switch 60, a first motor-side switch 71, a second motor-side switch 72, and a connection path 73 as a configuration for switching a connection state between the first storage battery 31 and the second storage battery 32. According to the present embodiment, the inter-battery switch 50, the bypass switch 60, and the motor-side switches 71 and 72 are mechanical relays. The inter-battery switch 50, the bypass switch 60, and the motor-side switches 71 and 72 inhibit bidirectional current flow when turned off and allow bidirectional current flow when turned on. Here, the inter-battery switch 50, the bypass switch 60, and the motor-side switches 71 and 72 are not limited to mechanical relays and, for example, may be semiconductor switching elements.

The inter-battery switch 50 connects the negative electrode terminal of the first storage battery 31 and the positive electrode terminal of the second storage battery 32. The negative electrode terminal of the first storage battery 31 and the positive electrode terminal of the second storage battery 32 are electrically connected by the inter-battery switch 50 being turned on. Meanwhile, the negative electrode terminal of the first storage battery 31 and the positive electrode terminal of the second storage battery 32 are electrically disconnected by the inter-battery switch 50 being turned off.

The bypass switch 60 connects the negative electrode terminal of the first storage battery 31 and the low-potential-side path 22L. The negative electrode terminal of the first storage battery 31 and the negative electrode terminal of the second storage battery 32 are electrically connected by the bypass switch 60 being turned on. Meanwhile, the negative electrode terminal of the first storage battery 31 and the negative electrode terminal of the second storage battery 32 are electrically disconnected by the bypass switch 60 being turned off.

Here, according to the present embodiment, the first storage battery 31 and the second storage battery 32 configure a battery unit 30.

The connection path 73 is an electrical path that connects the positive electrode terminal of the second storage battery 32 and the neutral point O. On the connection path 73, the first motor-side switch 71 and the second motor-side switch 72 are provided in this order from the second storage battery 32.

The power conversion apparatus includes a neutral point capacitor 74 that is a capacitor connecting the connection path 73 and the low-potential-side path 22L. A first end of the neutral point capacitor 74 is connected to a portion of the connection path 73 between the first motor-side switch 71 and the second motor-side switch 72. A second end of the neutral point capacitor 74 is connected to a portion of the low-potential-side path 22L further toward the inverter 20 side than the low-potential-side main switch SMRL and the pre-charge main switch SMRP.

The first end of the neutral point capacitor 74 and the positive electrode terminal of the second storage battery 32 are electrically connected by the first motor-side switch 71 being turned on. Meanwhile, the first end of the neutral point capacitor 74 and the positive electrode terminal of the second storage battery 32 are electrically disconnected by the first motor-side switch 71 being turned off. The neutral point O of the armature windings 11 and the first end of the neutral point capacitor 74 are electrically connected by the second motor-side switch 72 being turned on. Meanwhile, the neutral point O and the first end of the neutral point capacitor 74 are electrically disconnected by the second motor-side switch 72 being turned off.

The power conversion apparatus includes a first current sensor 81, a second current sensor 82, a phase current sensor 83, and a motor current sensor 84 as current sensors that detect a current flowing through each section of the power conversion apparatus itself. The first current sensor 81 detects a current flowing to the first storage battery 31. The second current sensor 82 detects a current flowing to the second storage battery 32. The phase current sensor 83 detects a current flowing to the armature winding 11 of each phase. The motor current sensor 84 detects a current flowing to the connection path 73. According to the present embodiment, the motor current sensor 84 detects a current flowing to a portion of the connection path 73 further toward the neutral point O side than the connection point with the neutral point capacitor 74.

The power conversion apparatus includes a capacitor voltage sensor 85 that detects an inter-terminal voltage of the neutral point capacitor 74, a first voltage sensor 86 that detects the inter-terminal voltage of the first storage battery 31, and a second voltage sensor 87 that detects the inter-terminal voltage of the second storage battery 32. For example, the first voltage sensor 86 may detect the inter-terminal voltage of each unit battery configuring the first storage battery 31. For example, the second voltage sensor 87 may detect the inter-terminal voltage of each unit battery configuring the second storage battery 32. In addition, the power conversion apparatus also includes a power supply voltage sensor 89 that detects an inter-terminal voltage of the smoothing capacitor 21.

The power conversion apparatus includes a temperature sensor 88 that detects temperatures of the first storage battery 31 and the second storage battery 32. For example, the temperature sensor 88 may detect the temperature of each unit battery configuring the first storage battery 31 and the temperature of each unit battery configuring the second storage battery 32. Here, as another sensor, the power conversion apparatus includes a rotation angle sensor (not shown) that detects a rotation angle (electrical angle) of the rotor.

The system includes a battery ECU 90 that controls the battery unit 30 and an EVECU 100 that controls the inverter 20. The battery ECU 90 is an electronic control unit mainly configured by a microcomputer 91. The EVECU 100 is an electronic control unit mainly configured by a microcomputer 101. The battery ECU 90 and EVECU 100 are capable of exchanging information through communication units for controller area network (CAN) communication or the like.

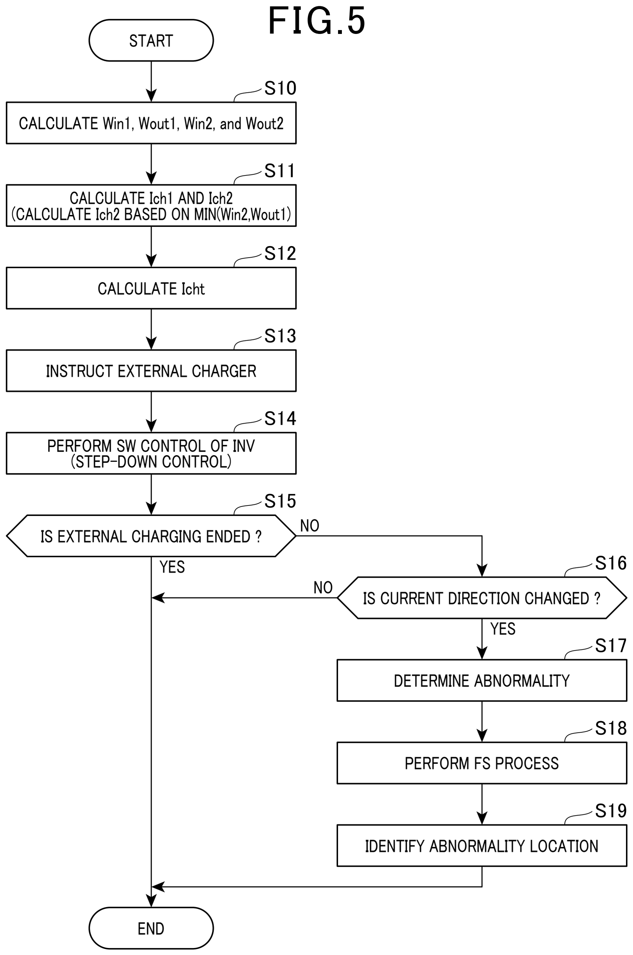

Each of the microcomputers 91 and 101 includes a central processing unit (CPU). Functions provided by each of the microcomputers 91 and 101 can be provided by software recorded in a tangible memory device and a computer that runs the software, only software, only hardware, or a combination thereof. For example, when each of the microcomputers 91 and 101 is provided by an electronic circuit that is hardware, the microcomputer 91 and 101 can be provided by a digital circuit including numerous logic circuits or an analog circuit. For example, each of the microcomputers 91 and 101 executes a program stored in a non-transitory, tangible storage medium that serves as a storage unit provided in the microcomputer 91 and 101 itself. For example, the program may include programs for processes shown in Fig. 5 and the like, described hereafter. As a result of a set of instructions composing the program being performed, a method corresponding to the program is performed. For example, the storage unit may be a non-volatile memory. Here, the program stored in the storage unit can be updated over a communication network such as the Internet, through Over-The-Air (OTA), for example.

The battery ECU 90 receives input of detection values of the first current sensor 81, the second current sensor 82, the first voltage sensor 86, the second voltage sensor 87, and the temperature sensor 88. The battery ECU 90 calculates a state-of-charge (SOC) of each unit battery configuring the first storage battery 31 based on the detection values of the first voltage sensor 86, the first current sensor 81, and the temperature sensor 88. The battery ECU 90 calculates the SOC of each unit battery configuring the second storage battery 32 based on the detection values of the second voltage sensor 87, the second current sensor 82, and the temperature sensor 88.

The EVECU 100 receives input of the detection values of the phase current sensor 83, the motor current sensor 84, the capacitor voltage sensor 85, the power supply voltage sensor 89, and the rotation angle sensor. The EVECU 100 performs switching control of the switches SWH and SWL configuring the inverter 20 to perform feedback control of a controlled variable of the motor 10 to a command value based on the inputted detection values of the sensors. The controlled variable may be, for example, torque. In each phase, the upper arm switch SWH and the lower arm switch SWL are alternately turned on. As a result, rotational power of the rotor provided in the motor 10 is transmitted to the drive wheel and the vehicle travels.

The main switches SMRH, SMRL, and SMRP, the connection switches DCRH and DCRL, the inter-battery switch 50, the bypass switch 60, and the motor-side switches 71 and 72 may be controlled by either of the battery ECU 90 and the EVECU 100. According to the present embodiment, for convenience, the main switches SMRH, SMRL, and SMRP, the connection switches DCRH, and DCRL, the inter-battery switch 50, the bypass switch 60, the first motor-side switch 71, and the second motor-side switch 72 are controlled by the EVECU 100.

Next, external charging control will be described.

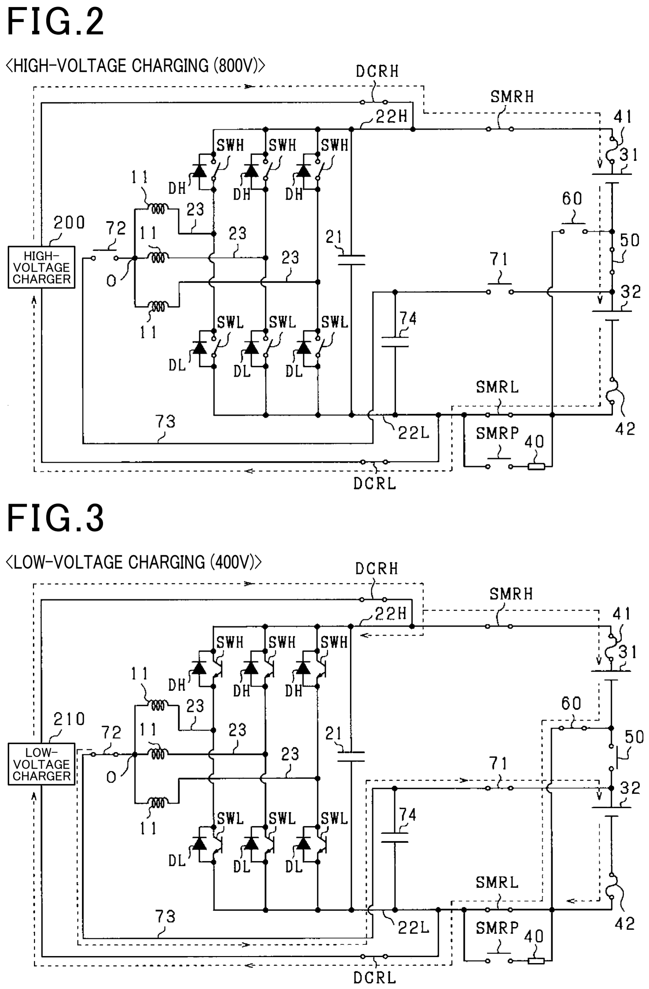

According to the present embodiment, as shown in Fig. 2 and Fig. 3, the external charger is a high-voltage charger 200 or a low-voltage charger 210. A charging voltage of the high-voltage charger 200 is higher than the inter-terminal voltage (specifically, the rated voltage) of a series connection body composed of the first and second storage batteries 31 and 32. For example, the charging voltage may be 800 V. The charging voltage of the low-voltage charger 210 is lower than the inter-terminal voltage of the series connection body composed of of the first and second storage batteries 31 and 32, and higher than the inter-terminal voltage (specifically, the rated voltage) of the first storage battery 31. For example, the charging voltage may be 400 V. When the first and second storage batteries 31 and 32 are charged by the external charger, the high-potential-side connection switch DCRH and the low-potential-side connection switch DCRL are switched to on. Meanwhile, when charging by the external charger is not performed or when the external charger is not connected to the power conversion apparatus, the high-potential-side connection switch DCRH and the low-potential-side connection switch DCRL are switched to off.

Fig. 2 shows a control state of each switch during external charging control using the high-voltage charger 200. The high-voltage charger 200 and the power conversion apparatus are electrically connected by a vehicle user electrically connecting a charging plug of the high-voltage charger 200 to the connection switches DCRH and DCRL. When determined that the external charger connected to the power conversion apparatus is the high-voltage charger 200, the EVECU 100 turns off the pre-charge main switch SMRP, the bypass switch 60, the first motor-side switch 71, the second motor-side switch 72, and the upper and lower arm switches SWH and SWL of all phases of inverter 20, and turns on the high-potential-side main switch SMRH, the low-potential-side main switch SMRL, and the inter-battery switch 50. As a result, the first storage battery 31 and the second storage battery 32 are in a state of being connected in series to the high-voltage charger 200. Therefore, a current flows to a closed circuit including the high-voltage charger 200, the high-potential-side path 22H, the first storage battery 31, the inter-battery switch 50, the second storage battery 32, and the low-potential-side path 22L, and the first storage battery 31 and the second storage battery 32 are charged in a state of being connected in series. At this time, the upper arm switches SWH of the inverter 20 and the second motor-side switch 72 are turned off. Therefore, the charging current of the high-voltage charger 200 flowing to the inverter 20 and the armature windings 11 can be prevented.

Fig. 3 shows a control state of each switch during external charging control using the low-voltage charger 210. The low-voltage charger 210 and the power conversion apparatus are electrically connected by the vehicle user electrically connecting a charging plug of the low-voltage charger 210 to the connection switches DCRH and DCRL. When determined that the external charger connected to the power conversion apparatus is the low-voltage charger 210, the EVECU 100 turns off the pre-charge main switch SMRP and the inter-battery switch 50, and turns on the high-potential-side main switch SMRH, the low-potential-side main switch SMRL, the bypass switch 60, the first motor-side switch 71, and the second motor-side switch 72. As a result, a current flows to a closed circuit including the low-voltage charger 210, the high-potential-side path 22H, the first storage battery 31, the bypass switch 60, and the low-potential-side path 22L, and the first storage battery 31 is charged.

In the external charging control by the low-voltage charger 210, the EVECU 100 steps down an output voltage of the low-voltage charger 210 and supplies the stepped-down output voltage to the second storage battery 32 by performing switching control in which the upper and lower arm switches SWH of at least a single phase are alternately turned on, or switching control of the upper arm switch SWH of at least a single phase in a state in which the lower arm switches SWL of all phases of the inverter 20 are in an off state. Specifically, the EVECU 100 performs step-down control that is the above-described switching control for controlling the voltage (hereafter, a neutral-point capacitor voltage VN) detected by the capacitor voltage sensor 85 to a target charging voltage. As a result, a current flows to a closed circuit including the low-voltage charger 210, the high-potential-side path 22H, the upper arm switch SWH of the inverter 20, the armature winding 11, the neutral point O, the second motor-side switch 72, the first motor-side switch 71, the second storage battery 32, and the low-potential-side path 22L, and the second storage battery 32 is charged. The inter-terminal voltage of the second storage battery 32 is lower than the inter-terminal voltage of the first storage battery 31. Therefore, the target charging voltage of the second storage battery 32 is lower than the target charging voltage of the first storage battery 31.

Here, according to the present embodiment, the first storage battery 31 corresponds to a "supply-source power storage unit". The second storage battery 32 corresponds to a "supply-destination power storage unit". In addition, the armature windings 11, the inverter 20, and the connection path 73 correspond to a "transformer circuit".

Incidentally, during the external charging control by the low-voltage charger 210, the external charging control may suddenly stop for some reason. For example, the external charging control suddenly may stop in a case in which a fault has occurred in the low-voltage charger 210 or a component in the power conversion apparatus related to the external charging control, or the user pulls out the charging plug during the external charging control. In this case, the current continues to flow from the first storage battery 31 to the second storage battery 32 through the inverter 20, the armature windings 11, and the connection path 73 until the switching control of the inverter 20 is stopped. Power is taken out of the first storage battery 31. As a result, discharging power of the first storage battery 31 increases. Over-discharge of the first storage battery 31 may occur, and the first storage battery 31 may become faulty. Therefore, according to the present embodiment, the charging current of the second storage battery 32 is set so that the over-discharge of the first storage battery 31 does not occur. A setup method will be described below.

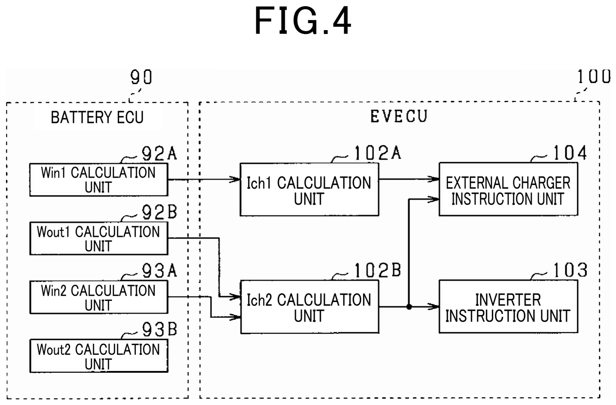

Fig. 4 is a functional block diagram illustrating the battery ECU 90 and the EVECU 100.

The battery ECU 90 includes a first input-power calculation unit 92A, a first output-power calculation unit 92B, a second input-power calculation unit 93A and a second output-power calculation unit 93B as processing units that calculate parameters related to charging and discharge of the first storage battery 31 and the second storage battery 32.

The first input-power calculation unit 92A calculates a first upper-limit input power Win1 based on a battery state of the first storage battery 31. The first upper-limit input power Win1 is a maximum value of power that can be input to the first storage battery 31. For example, the battery state of the first storage battery 31 may include the temperature of the first storage battery 31 detected by the temperature sensor 88 and the SOC of the first storage battery 31. For example, the first input-power calculation unit 92A may calculate the first upper-limit input power Win1 to decrease as the SOC of the first storage battery 31 becomes higher or the temperature of the first storage battery 31 becomes lower. For example, the SOC used to calculate the first upper-limit input power Win1 may be a maximum value of the SOC of each unit battery configuring the first storage battery 31, or an average value of the SOC of the unit batteries.

The first output-power calculation unit 92B calculates a first upper-limit output power Wout1 based on the battery state of the first storage battery 31. The first upper-limit output power Wout1 is a maximum value of power that can be output from the first storage battery 31. For example, the first output-power calculation unit 92B may calculate the first upper-limit output power Wout1 to be greater as the SOC of the first storage battery 31 becomes higher or the temperature of the first storage battery 31 detected by the temperature sensor 88 becomes higher. For example, the SOC used to calculate the first upper-limit output power Wout1 may be a minimum value of the SOC of each unit battery configuring the first storage battery 31, or an average value of the SOC of the unit batteries.

The second input-power calculation unit 93A calculates a second upper-limit input power Win2 based on a battery state of the second storage battery 32. The second upper-limit input power Win2 is a maximum value of power that can be input to the second storage battery 32. For example, the battery state of the second storage battery 32 may include the temperature of the second storage battery 32 detected by the temperature sensor 88 and the SOC of the second storage battery 32. For example, the second input-power calculation unit 93A may calculate the second upper-limit input power Win2 to decrease as the SOC of the second storage battery 32 becomes higher or the temperature of the second storage battery 32 becomes lower. For example, the SOC used to calculate the second upper-limit input power Win2 may be a maximum value of the SOC of each unit battery configuring the second storage battery 32, or an average value of the SOC of the unit batteries.

The second output-power calculation section 93B calculates a second upper-limit output power Wout2 based on the battery state of the second storage battery 32. The second upper-limit output power Wout2 is a maximum value of power that can be output from the second storage battery 32. For example, the second output-power calculation unit 92B may calculate the second upper-limit output power Wout2 to be greater as the SOC of the second storage battery 32 becomes higher or the temperature of the second storage battery 32 detected by the temperature sensor 88 becomes higher. For example, the SOC used to calculate the second upper-limit output power Wout2 may be a minimum value of the SOC of each unit battery configuring the second storage battery 32, or an average value of the SOC of the unit batteries.

The EVECU 100 includes a first charging-current calculation unit 102A, a second charging-current calculation unit 102B, an inverter instruction unit 103, and an external charger instruction unit 104.

The first charging-current calculation unit 102A calculates a first command charging current Ich1 that is a command value of a charging current of the first storage battery 31, based on the calculated first upper-limit input power Win1 and a first detection voltage VH that is a detection voltage of the first voltage sensor 86. According to the present embodiment, the first charging-current calculation unit 102A calculates a value obtained by dividing the first upper-limit input power Win1 by the first detection voltage VH as the first command charging current Ich1 (= Win1/VH). For example, when the first upper-limit input power Win1 is 20 kW and the first detection voltage VH is 400 V, the first command charging current Ich1 may be 50 A.

The second charging-current calculation unit 102B calculates a second command charging current Ich2 that is a command value of a charging current of the second storage battery 32, based on the calculated first upper-limit output power Wout1, in addition to the calculated second upper-limit input power Win2 and a second detection voltage VL that is a detection voltage of the second voltage sensor 87. According to the present embodiment, the second command charging current Ich2 corresponds to a "supply-destination command charging current". A reason the first upper-limit output power Wout1 of the first storage battery 31 is used to calculate the charging current of the second storage battery 32 is to suppress the output power of the first storage battery 31 from exceeding the first upper-limit output power Wout1 and to suppress the occurrence of over-discharge of the first storage battery 31, even if the external charging control is suddenly stopped.

First, the second charging-current calculation unit 102B selects, between the second upper-limit input power Win2 (corresponding to an "upper-limit input value") and the first upper-limit output power Wout1 (corresponding to an "upper-limit output value"), that having a smaller absolute value as reference power Wstd. The second charging-current calculation unit 102B calculates a value obtained by dividing the selected reference power Wstd by the second detection voltage VL as the second command charging current Ich2 (= Wstd/VL). For example, when the first upper-limit output power Wout1 is 5 kW, the second upper-limit input power Win2 is 10 kW, and the second detection voltage VL is 200 V, the reference power Wstd is 5 kW and the second command charging current Ich2 may be 25 A (= 5 kW/200 V).

The inverter instruction unit 103 performs step-down control of the inverter 20 to control the current flowing to the second storage battery 32 to the calculated second command charging current Ich2. Specifically, for example, the inverter instruction unit 103 may perform step-down control of the inverter 20 to control a detection current of the second current sensor 82 or a motor current IN that is a detection current of the motor current sensor 84 to the second command charging current Ich2.

The external charger instruction unit 104 calculates an external command charging current Icht that is a command value of the charging current output from the low-voltage charger 210, based on the calculated first and second command charging currents Ich1 and Ich2 and the first and second detection voltages VH and VL. The first and second detection voltages VH and VL are used to allow an amount of voltage drop caused by the step-down control to be taken into consideration.

First, the external charger instruction unit 104 calculates a first command conversion current Ichc1 based on the second command charging current Ich2, and the first and second detection voltages VH and VL. Specifically, the external charger instruction unit 104 calculates the first command conversion current Ichc1 based on Ichc1 = Ich2×VL/VH. For example, when the first detection voltage VH is 400 V, the second detection voltage VL is 200 V, and the second command charging current Ich2 is 25 A, the first command conversion current Ichc1 may be 12.5 A (= 25 A×200 V/400 V).

The external charger instruction unit 104 calculates a value obtained by adding the first command charging current Ich1 (such as 50 A) to the calculated first command conversion current Ichc1 (such as 12.5 A) as the external command charging current Icht (such as 62.5 A). The external charger instruction unit 104 transmits the calculated external command charging current Icht to the low-voltage charger 210. As a result, the low-voltage charger 210 is controlled such that an output current of the low-voltage charger 210 becomes the external command charging current Icht.

Fig. 5 is a flowchart illustrating steps in an external charging control process of the low-voltage charger 210. This process may be repeatedly performed at a predetermined control cycle, for example, through cooperation between the EVECU 100 and the battery ECU 90.

At step S10, the battery ECU 90 calculates the first upper-limit input power Win1, the first upper-limit output power Wout1, the second upper-limit input power Win2, and the second upper-limit output power Wout2 and transmits the first upper-limit input power Win1, the first upper-limit output power Wout1, the second upper-limit input power Win2, and the second upper-limit output power Wout2 to the EVECU 100.

At step S11, the EVECU 100 calculates the first command charging current Ich1 and the second command charging current Ich2. According to the present embodiment, the process at step S11 corresponds to a "command value calculation unit".

At step S12, the EVECU 100 calculates the external command charging current Icht and, at step S13, transmits the external command charging current Icht to the low-voltage charger 210. According to the present embodiment, the process at step S12 corresponds to an "external command value calculation unit".

At step S14, the EVECU 100 performs step-down control of the inverter 20 to control the current flowing to the second storage battery 32 to the second command charging current Ich2. According to the present embodiment, the process at step S14 corresponds to a "circuit control unit".

At step S15, the EVECU 100 determines whether the external charging control has ended. When determined that the external charging control has not ended, at step S16, the EVECU 100 determines whether a direction of the current flowing to the first storage battery 31 is a direction for charging the first storage battery 31. This determination process is a process for determining whether the external charging control has suddenly stopped. In the case in which the external charging control has suddenly stopped, the direction of the current flowing to the first storage battery 31 switches from the direction for charging the first storage battery 31 to a direction for discharging from the first storage battery 31. For example, the EVECU 100 may determine the direction of the current flowing to the first storage battery 31 based on the detection current of the first current sensor 81.

When determined that the direction of current flowing to the first storage battery 31 is the direction for charging the first storage battery 31, the EVECU 100 continues the external charging control. Meanwhile, when determined that the direction of the current flowing to the first storage battery 31 is the direction for discharging from the first storage battery 31, at step S17, the EVECU 100 determines that an abnormality in which the external charging control is suddenly stopped has occurred.

At step S18, the EVECU 100 performs a fail-safe process. According to the present embodiment, as the fail-safe process, the EVECU 100 performs a process in which the high-potential-side main switch SMRH and the low-potential-side main switch SMRL are switched to off after the step-down control (switching control) of the inverter 20 is stopped and the current flowing to the main switches SMRH and SMRL becomes 0. As a result, occurrence of welding of the main switches SMRH and SMRL can be suppressed.

At step S19, EVECU 100 identifies that a fault has occurred in any of the connection switches DCRH and DCRL, and from the connection switches DCRH and DCRL to the charging plug, among constituent components of the power conversion apparatus. This identification information is stored in a memory of the EVECU 100. As a result, when the vehicle is subsequently repaired at a repair shop, for example, a fault location in the power conversion apparatus can be promptly identified using a diagnostic tool, and the faulty component can be promptly replaced. After completing the process at step S19, the EVECU 100 ends the external charging control.

Here, according to the present embodiment, the processes at steps S16 to S19 correspond to an "abnormality processing unit".

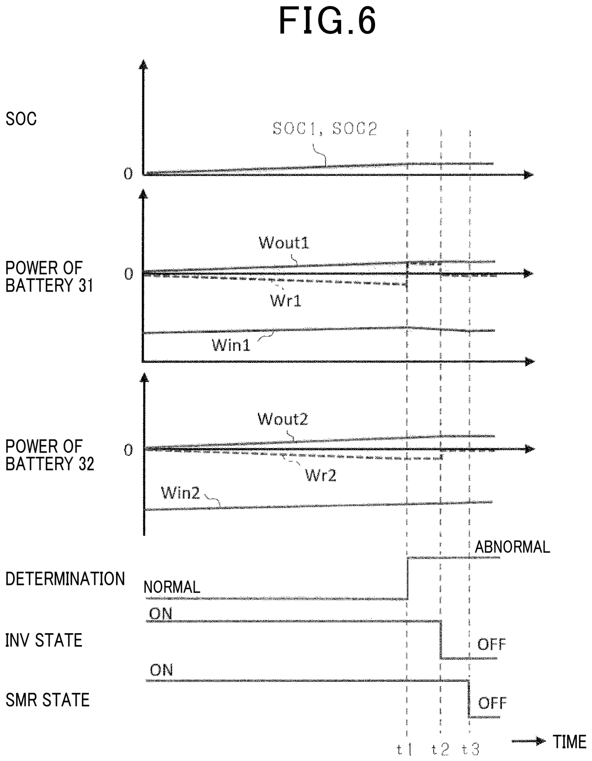

Fig. 6 shows an example of waveforms when the external charging control of the low-voltage charger 210 is performed. In Fig. 6, SOC1 is the SOC of the unit battery configuring the first storage battery 31, and SOC2 is the SOC of the unit battery configuring the second storage battery 32. Wr1 is actual charging/discharging power of the first storage battery 31, and Wr2 is actual charging/discharging power of the second storage battery 32. In Fig. 6, a sign of each power is such that the discharging side is positive and the charging side is negative.

When the external charging control is started, the first command charging current Ich1 is calculated based on the first upper-limit input power Win1 and the first detection voltage VH, and the charging current of the first storage battery 31 is controlled to the first command charging current Ich1. In accompaniment with charging of the first storage battery 31, the SOC1 gradually increases, and the inter-terminal voltage of the first storage battery 31 gradually increases. In accompaniment with the gradual increase in the SOC1, a magnitude of the first upper-limit input power Win1 gradually decreases, and a magnitude of the first upper-limit output power Wout1 gradually increases.

Meanwhile, the second command charging current Ich2 is calculated based on the second upper-limit input power Win2, the second detection voltage VL, and the first upper-limit output power Wout1. In accompaniment with charging of the second storage battery 32, the SOC2 gradually increases, and the inter-terminal voltage of the second storage battery 32 gradually increases. In accompaniment with the gradual increase in the SOC2, a magnitude of the second upper-limit input power Win2 gradually decreases, and a magnitude of the second upper-limit output power Wout2 gradually increases.

At time T1, the external charging control suddenly stops for some reason, and power supply from the low-voltage charger 210 to the first storage battery 31 is stopped. Here, the second command charging current Ich2 of the second storage battery 32 is calculated based on that having a smaller absolute value, between the second upper-limit input power Win2 and the first upper-limit output power Wout1. Therefore, occurrence of a situation in which discharging power Wr1 of the first storage battery 31 exceeds the first upper-limit output power Wout1 can be suppressed without a discharging current of the first storage battery 31 becoming excessively large to charge the second storage battery 32. As a result, occurrence of a fault in the first storage battery 31 can be suppressed.

Subsequently, the fail-safe process is started. At time t2, the step-down control of the inverter 20 is stopped. At time t3, the high-potential-side main switch SMRH and the low-potential-side main switch SMRL are switched to off. In the example shown in Fig. 6, during a period from the external charging control suddenly stopping until the step-down control of the inverter 20 is stopped, the discharging power Wr1 of the first storage battery 31 does not exceed the first upper-limit output power Wout1.

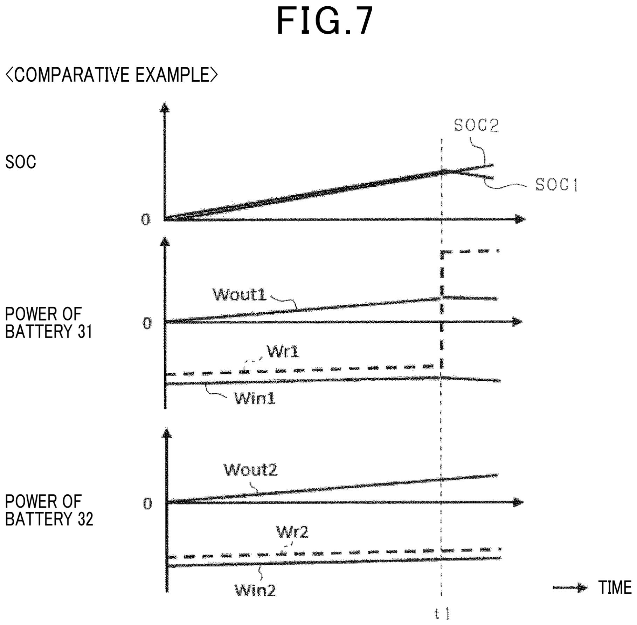

Fig. 7 shows an example of waveforms when external charging control of a comparative example is performed. In the comparative example, unlike that according to the present embodiment, the first upper-limit output power Wout1 is not used to calculate the second command charging current Ich2. That is, the second command charging current Ich2 is calculated as Win2/VL. In this case, if the external charging control suddenly stops at time t1, the discharging power Wr1 of the first storage battery 31 greatly exceeds the first upper-limit output power Wout1, and a fault in the first storage battery 31 may occur.

### <Variation examples according to the first embodiment>

At step S18 in Fig. 5, the EVECU 100 may stop the step-down control of the inverter 20 after switching the high-potential-side main switch SMRH and the low-potential-side main switch SMRL to off. As a result, discharge of the first storage battery 31 can be promptly stopped.

The second command charging current Ich2 may be calculated as a value that is less than Wstd/VL. In addition, the first command charging current Ich1 may be calculated as a value that is less than Win1/VH.

### <Second embodiment>

A second embodiment will be described below with reference to the drawings, mainly focusing on differences from the first embodiment. According to the present embodiment, a distribution proportion of the output current of the low-voltage charger 210 to the first and second storage batteries 31 and 32 is adjusted based on the first upper-limit output power Wout1 of the first storage battery 31, the second upper-limit input power Win2 of the second storage battery 32, and the SOC of the first and second storage batteries 31 and 32.

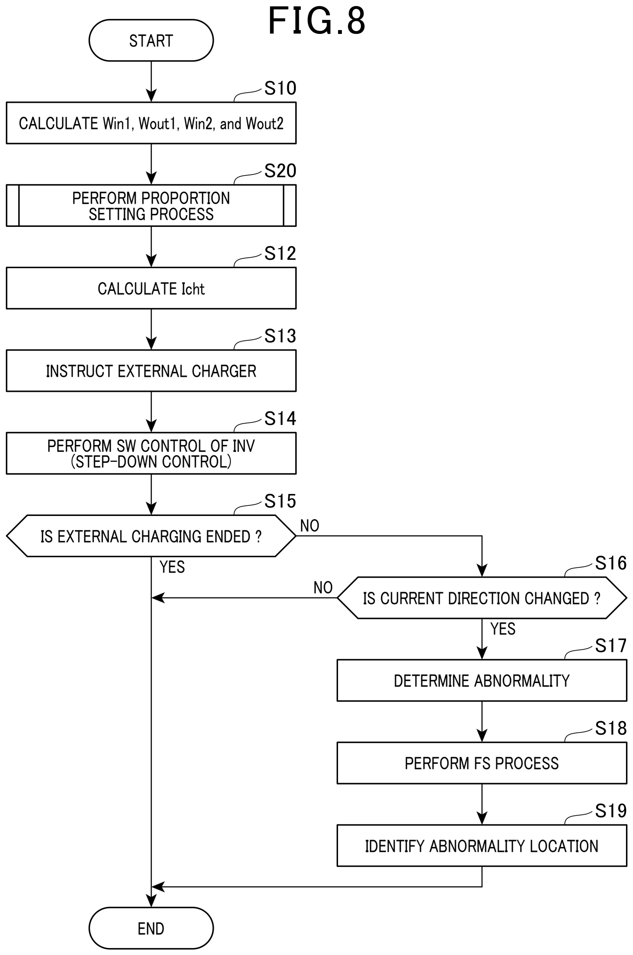

Fig. 8 is a flowchart illustrating steps in an external charging control process of the low-voltage charger 210. This process may be repeatedly performed at a predetermined control cycle, for example, through cooperation between the EVECU 100 and the battery ECU 90.

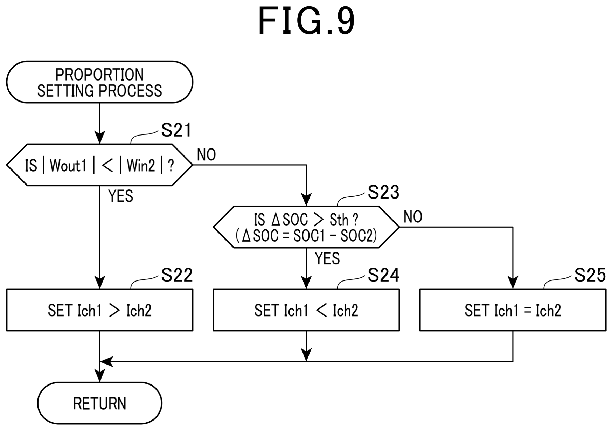

After step S10, at step S20, the EVECU 100 performs a proportion setting process. Fig. 9 is a flowchart illustrating steps in the proportion setting process. Here, according to the present embodiment, the process at step S20 corresponds to the "command value calculation unit".

At step S21, the EVECU 100 determines whether an absolute value of the first upper-limit output power Wout1 is less than an absolute value of the second upper-limit input power Win2.

When determined that the absolute value of the first upper-limit output power Wout1 is less than the absolute value of the second upper-limit input power Win2, the EVECU 100 proceeds to step S22. At step S22, the EVECU 100 applies a condition that the charging power of the first storage battery 31 is equal to or less than the first upper-limit input power Win1, and the charging power of the second storage battery 32 is equal to or less than the second upper-limit input power Win2, and calculates the first command charging current Ich1 to be greater than the second command charging current Ich2. As a result, the charging power of the first storage battery 31 is greater than the charging power of the second storage battery 32. According to the present embodiment, the first command charging current Ich1 corresponds to a "supply-source command charging current".

Over-discharge as a result of the external charging control suddenly stopping occurs in the first storage battery 31 rather than the second storage battery 32. To prevent the occurrence of over-discharge in the first storage battery 31, the first upper-limit output power Wout1 of the first storage battery 31 is required to be increased as quickly as possible. In light of this point, the process at step S22 in which charging of the first storage battery 31 is prioritized over the second storage battery 32 is provided. According to the present embodiment, the EVECU 100 calculates the first command charging current Ich1 based on the first upper-limit input power Win1 and the first detection voltage VH. Specifically, for example, the first command charging current Ich1 may be Win1/VH. In addition, the EVECU 100 sets the second command charging current Ich2 to 0.

When determined that the absolute value of the first upper-limit output power Wout1 is equal to or greater than the absolute value of the second upper-limit input power Win2, at step S23, the EVECU 100 calculates a difference ΔSOC in charging rate and determines whether the calculated difference ΔSOC in charging rate is greater than a determination threshold Sth. The difference ΔSOC in charging rate is a value obtained by subtracting the SOC2 of the unit battery configuring the second storage battery 32 from the SOC1 of the unit battery configuring the first storage battery 31.

When determined that the difference ΔSOC in charging rate is greater than the determination threshold Sth, the EVECU 100 proceed to step S24. At step S24, the EVECU 100 applies a condition that the charging power of the first storage battery 31 is equal to or less than the first upper-limit input power Win1, and the charging power of the second storage battery 32 is equal to or less than the second upper-limit input power Win2, and calculates the second command charging current Ich2 to be greater than the first command charging current Ich1. As a result, the charging power of the second storage battery 32 is greater than the charging power of the first storage battery 31. The process at step S24 is a process for reducing the difference between the SOC of the unit batteries configuring the first storage battery 31 and the SOC of the unit batteries configuring the second storage battery 32 as quickly as possible. According to the present embodiment, the EVECU 100 calculates the second command charging current Ich2 based on the second upper-limit input power Win2 and the second detection voltage VL. Specifically, for example, the second command charging current Ich2 may be Win2/VL.

When determined that the difference ΔSOC in charging rate is equal to or less than the determination threshold Sth, at step S25, the EVECU 100 applies a condition that the charging power of the first storage battery 31 is equal to or less than the first upper-limit input power Win1, and the charging power of the second storage battery 32 is equal to or less than the second upper-limit input power Win2, and calculates the first command charging current Ich1 and the second command charging current Ich2 to be the same value. As a result, the difference between the SOC of the unit batteries configuring the first storage battery 31 and the SOC of the unit batteries configuring the second storage battery 32 is kept from becoming large.

After the process at step S22, S24 or S25, returning to the description for Fig. 8, above, at step S12, the EVECU 100 calculates the external command charging current Icht by adding the first command charging current Ich1 and the second command charging current Ich2 calculated by the process in Fig. 9. At step S13, the EVECU 100 transmits the external command charging current Icht to the low-voltage charger 210. At step S14, the second command charging current Ich2 calculated by the process in Fig. 9 is used for the step-down control of the inverter 20.

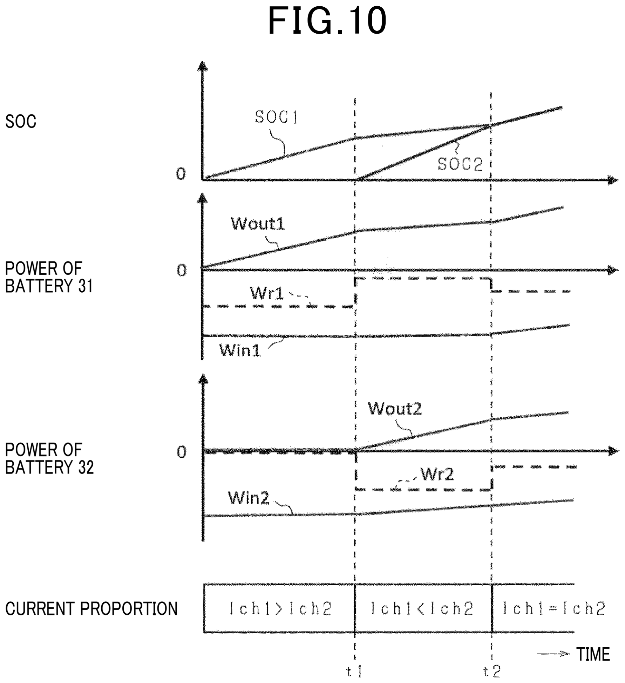

Fig. 10 shows an example of waveforms when the external charging control of the low-voltage charger 210 is performed.

After the external charging control is started, the EVECU 100 determines that the absolute value of the first upper-limit output power Wout1 is less than the absolute value of the second upper-limit input power Win2. As a result, the EVECU 100 calculates the first command charging current Ich1 to be greater than the second command charging current Ich2.

At time t1, the EVECU 100 determines that the absolute value of the first upper-limit output power Wout1 is equal to or greater than the absolute value of the second upper-limit input power Win2. Then, the EVECU 100 determines that the difference ΔSOC in charging rate is greater than the determination threshold Sth. As a result, the EVECU 100 calculates the second command charging current Ich2 to be greater than the first command charging current Ich1.

At time t2, the EVECU 100 determines that the difference ΔSOC in charging rate is equal to or less than the determination threshold Sth. As a result, the EVECU 100 sets the first command charging current Ich1 and the second command charging current Ich2 to the same value.

According to the present embodiment described above, a charging period of the first and second storage batteries 31 and 32 can be shortened while suppressing risk of over-discharging the first storage battery 31 as a result of the external charging control suddenly stopping.

### <Variation examples according to the second embodiment>

At step S22 in Fig. 9, the second command charging current Ich2 may be set to a value greater than 0.

### <Third embodiment>

A third embodiment will be described below with reference to the drawings, mainly focusing on differences from the first embodiment. According to the present embodiment, an occurrence of over-charging of the first storage battery 31 as a result of the external power supply control suddenly stopping during the external power supply control is suppressed.

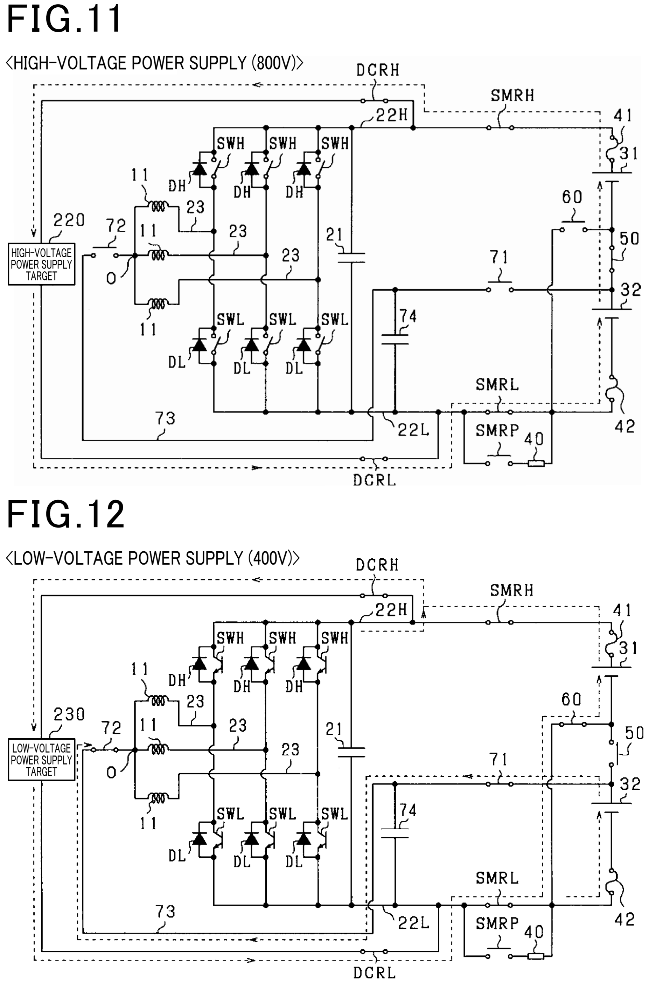

Fig. 11 shows a control state of each switch during the external power supply control in which a high-voltage power supply target 220 is supplied power from the first and second storage batteries 31 and 32. When determined that the power supply target connected to the power conversion apparatus is the high-voltage power supply target 220, the EVECU 100 turns off the pre-charge main switch SMRP, the bypass switch 60, the first motor-side switch 71, the second motor-side switch 72, and the upper and lower arm switches SWH and SWL of all phases of the inverter 20, and turns on the connection switches DCRH and DCRL, the high-potential-side main switch SMRH, the low-potential-side main switch SMRL, and the inter-battery switch 50. As a result, the first storage battery 31 and the second storage battery 32 are in a state of being connected in series to the high-voltage power supply target 220. Therefore, a current flows to a closed circuit including the first storage battery 31, the high-potential-side path 22H, the high-voltage power supply target 220, the low-potential-side path 22L, and the second storage battery 32, and power is supplied from the first storage battery 31 and the second storage battery 32 to the high-voltage power supply target 220.

Fig. 12 shows the control state of each switch during the external power supply control in which a low-voltage power supply target 230 is supplied power from the first and second storage batteries 31 and 32. A rated voltage of the low-voltage supply target 230 is lower than a rated voltage of the high-voltage supply target 220. When determined that the power supply target connected to the power conversion apparatus is the low-voltage power supply target 230, the EVECU 100 turns off the pre-charge main switch SMRP and the inter-battery switch 50, and turns on the connection switches DCRH and DCRL, the high-potential-side main switch SMRH, the low-potential-side main switch SMRL, the bypass switch 60, the first motor-side switch 71, and the second motor-side switch 72. As a result, a current flows to a closed circuit including the first storage battery 31, the high-potential-side path 22H, the low-voltage power supply target 230, the low-potential-side path 22L, and the bypass switch 60, and power is supplied from the first storage battery 31 to the low-voltage power supply target 230.

In the external power supply control for the low-voltage power supply target 230, the EVECU 100 steps up the output voltage of the second storage battery 32 and supplies the output voltage to the low-voltage power supply target 230 by performing switching control in which the upper and lower arm switches SWH and SWL of at least a single phase are alternately turned on, or switching control of the lower arm switch SWL of at least a single phase in a state in which the upper arm switches SWH of all phases of the inverter 20 are in the off state. Specifically, the EVECU 100 performs step-up control that is the above-described switching control for controlling the power supply voltage VB that is the detection voltage of the power supply voltage sensor 89 to a target power supply voltage. As a result, a current flows to a closed circuit including the second storage battery 32, the connection path 73, the armature windings 11, the inverter 20, the high-potential-side path 22H, the low-voltage power supply target 230, and the low-potential-side path 22L, and power is supplied from the second storage battery 32 to the low-voltage power supply target 230.

Here, according to the present embodiment, the second storage battery 32 corresponds to the "supply-source power storage unit" and the first storage battery 31 corresponds to the "supply-destination power storage unit".

Incidentally, during the external power supply control for the low-voltage power supply target 230, the external power supply control may suddenly stop for some reason. In this case, the current continues to be output from the second storage battery 32 to the first storage battery 31 through the inverter 20 until the switching control of the inverter 20 is stopped. As a result, over-charging of the first storage battery 31 may occur and the first storage battery 31 may become faulty. Therefore, according to the present embodiment, the discharging current of the second storage battery 32 is set so that the over-charging of the first storage battery 31 does not occur. A setup method will be described below.

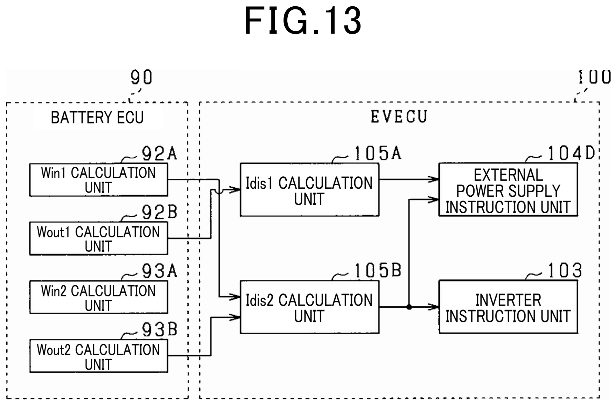

Fig. 13 is a functional block diagram illustrating the battery ECU 90 and the EVECU 100.

The EVECU 100 includes a first discharging-current calculation unit 105A and a second discharging current calculation unit 105B. The first discharging-current calculation unit 105A calculates a first command discharging current Idis1 that is a command value of the discharging current of the first storage battery 31, based on the first upper-limit output power Wout1 and the first detection voltage VH. According to the present embodiment, the first discharging-current calculation unit 105A calculates a value obtained by dividing the first upper-limit output power Wout1 by the first detection voltage VH as the first command discharging current Idis1 (= Wout1/VH).

The second discharging current calculation unit 105B calculates a second command discharging current Idis2 that is a command value of the discharging current of the second storage battery 32, based on the first upper-limit input power Win1, in addition to the second upper-limit output power Wout2 and the second detection voltage VL. According to the present embodiment, the second command discharging current Idis2 corresponds to a "supply-source command discharging current". A reason the first upper-limit input power Win1 of the first storage battery 31 is used to calculate the discharging current of the second storage battery 32 is to suppress the input power of the first storage battery 31 from exceeding the first upper-limit input power Win1 and to suppress the occurrence of over-charging of the first storage battery 31, even if the external power supply control is suddenly stopped.

First, the second discharging-current calculation unit 105B selects, between the second upper-limit output power Wout2 (corresponding to the "upper-limit output value") and the first upper-limit input power Win1 (corresponding to the "upper-limit input value"), that having a smaller absolute value as the reference power Wstd. The second discharging-current calculation unit 105B calculates a value obtained by dividing the selected reference power Wstd by the second detection voltage VL as the second command discharging current Idis2 (= Wstd/VL).

The inverter instruction unit 103 performs step-up control of the inverter 20 to control the current flowing to the second storage battery 32 (such as the detection current of the second current sensor 81B or the motor current IN) to the calculated second command discharging current Idis2.

The external power supply instruction unit 104D calculates an external command discharging current Idist that is a command value of the discharging current supplied from the storage batteries 31 and 32 to the low-voltage power supply target 230, based on the calculated first and second command discharging currents Idis1 and Idis2 and the first and second detection voltages VH and VL. The first and second detection voltages VH and VL are used to allow an amount of voltage increase caused by the step-up control to be taken into consideration.

First, the external power supply instruction unit 104D calculates a first command conversion current Idisc1 based on the second command discharging current Idis2, and the first and second detection voltages VH and VL. Specifically, the external power supply instruction unit 104D calculates the first command conversion current Idisc1 based on Idisc1 = Idis2×VL/VH. The external power supply instruction unit 104D calculates a value obtained by adding the first command discharging current Idis1 to the calculated first command conversion current Idisc1 as the external command discharging current Idist. The external power supply instruction unit 104D transmits the calculated external command discharging current Idist to the low-voltage power supply target 230. As a result, the low-voltage power supply target 230 is controlled such that an input current of the low-voltage power supply target 230 becomes the external command discharging current Idist.

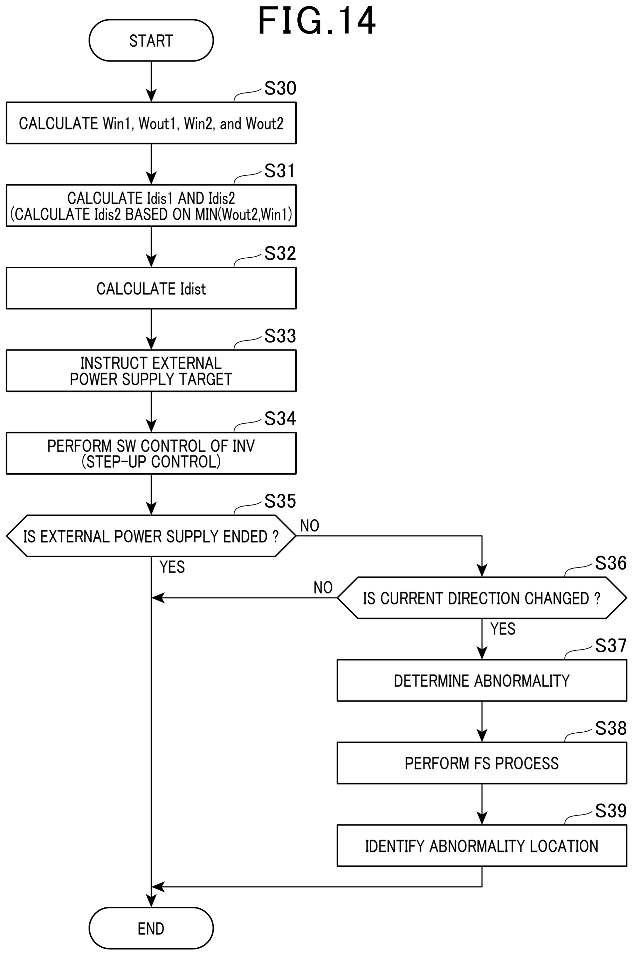

Fig. 14 is a flowchart illustrating steps in an external power supply control process for the low-voltage power supply target 230. This process may be repeatedly performed at a predetermined control cycle, for example, through cooperation between the EVECU 100 and the battery ECU 90.

At step S30, the battery ECU 90 calculates the first upper-limit input power Win1, the first upper-limit output power Wout1, the second upper-limit input power Win2, and the second upper-limit output power Wout2 and transmits the first upper-limit input power Win1, the first upper-limit output power Wout1, the second upper-limit input power Win2, and the second upper-limit output power Wout2 to the EVECU 100.

At step S31, the EVECU 100 calculates the first command discharging current Idis1 and the second command discharging current Idis2. According to the present embodiment, the process at step S31 corresponds to the "command value calculation unit".

At step S32, the EVECU 100 calculates the external command discharging current Idist and, at step S33, transmits the external command discharging current Idist to the low-voltage power supply target 230. According to the present embodiment, the process at step S32 corresponds to the "external command value calculation unit".

At step S34, the EVECU 100 performs step-up control of the inverter 20 to control the current flowing to the second storage battery 32 to the second command discharging current Idis2. According to the present embodiment, the process at step S34 corresponds to the "circuit control unit".

At step S35, the EVECU 100 determines whether the external power supply control has ended. When determined that the external power supply control has not ended, at step S36, the EVECU 100 determines whether a direction of the current flowing to the first storage battery 31 is a direction for discharging from the first storage battery 31. This determination process is a process for determining whether the external power supply control has suddenly stopped. In the case in which the external power supply control has suddenly stopped, the direction of the current flowing to the first storage battery 31 switches from the direction for discharging from the first storage battery 31 to the direction for charging the first storage battery 31. For example, the EVECU 100 may determine the direction of the current flowing to the first storage battery 31 based on the detection current of the first current sensor 81.

When determined that the direction of current flowing to the first storage battery 31 is the direction for discharging from the first storage battery 31, the EVECU 100 continues the external power supply control. Meanwhile, when determined that the direction of the current flowing to the first storage battery 31 is the direction for charging the first storage battery 31, at step S37, the EVECU 100 determines that an abnormality in which the external power supply control is suddenly stopped has occurred.

At step S38, the EVECU 100 performs a fail-safe process. According to the present embodiment, as the fail-safe process, the EVECU 100 performs a process in which the high-potential-side main switch SMRH and the low-potential-side main switch SMRL are switched to off after the step-up control (switching control) of the inverter 20 is stopped and the current flowing to the main switches SMRH and SMRL becomes 0.

At step S39, EVECU 100 identifies that a fault has occurred in any of the connection switches DCRH and DCRL, and from the connection switches DCRH and DCRL to the low-voltage power supply target 230, among the constituent components of the power conversion apparatus. This identification information is stored in a memory of the EVECU 100. As a result, when the vehicle is subsequently repaired at a repair shop, for example, a fault location in the power conversion apparatus can be promptly identified using a diagnostic tool, and the faulty component can be promptly replaced. After completing the process at step S39, the EVECU 100 ends the external power supply control.

Here, according to the present embodiment, the processes at steps S36 to S39 correspond to the "abnormality processing unit".

According to the present embodiment, described above, even if the external power supply control is suddenly stopped, the charging power of the first storage battery 31 exceeding the first upper-limit input power Win1 can be suppressed and the occurrence of overcharging of the first storage battery 31 can be suppressed, even if the external power supply control is suddenly stopped.

### <Variation examples according to the third embodiment>

At step S38 in Fig. 14, the EVECU 100 may stop the step-up control of the inverter 20 after switching the high-potential-side main switch SMRH and the low-potential-side main switch SMRL to off. As a result, charging of the first storage battery 31 can be promptly stopped.

The second command discharging current Idis2 may be calculated as a value that is less than Wstd/VL. In addition, the first command discharging current Idis1 may be calculated as a value that is less than Wout1/VH.

### <Fourth embodiment>

A fourth embodiment will be described below with reference to the drawings, mainly focusing on differences from the third embodiment. According to the present embodiment, a distribution proportion of the current supplied from the first and second storage batteries 31 and 32 to the low-voltage power supply target 230 is adjusted.

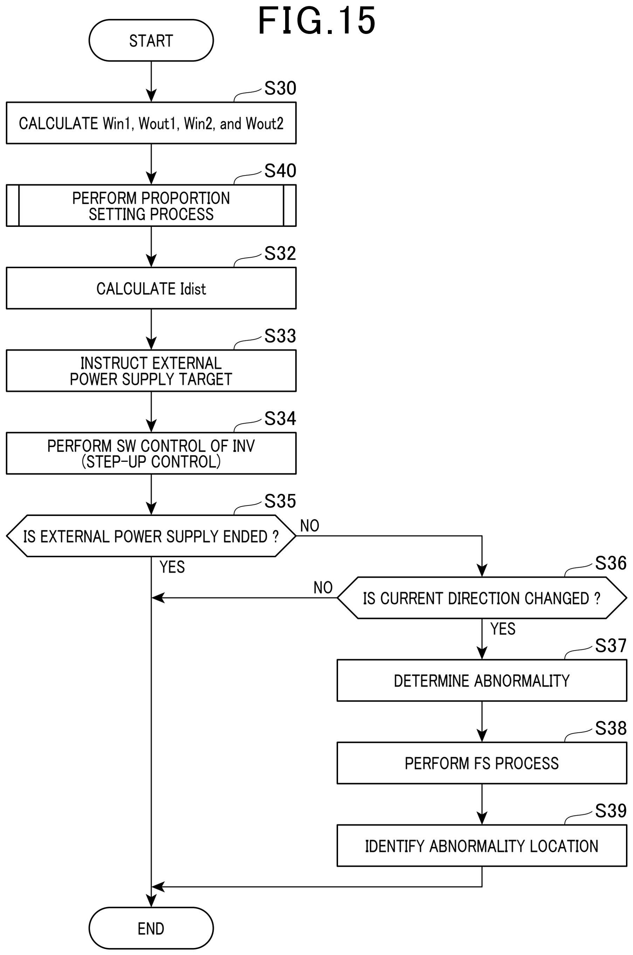

Fig. 15 is a flowchart illustrating steps in an external power supply control process for the low-voltage power supply target 230. This process may be repeatedly performed at a predetermined control cycle, for example, through cooperation between the EVECU 100 and the battery ECU 90.

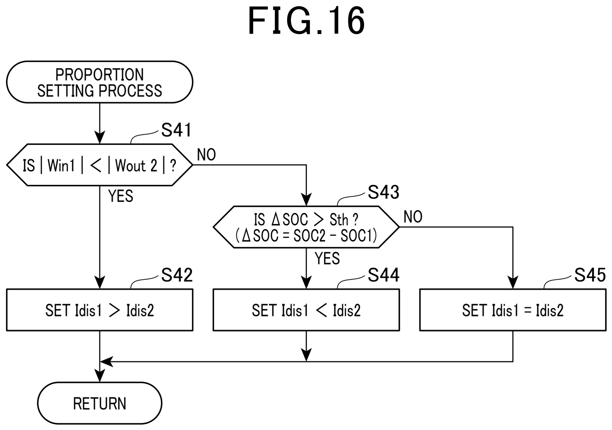

After step S30, at step S40, the EVECU 100 performs a proportion setting process. Fig. 16 is a flowchart of steps in the proportion setting process. Here, according to the present embodiment, the process at step S40 corresponds to the "command value calculation unit".

At step S41, the EVECU 100 determines whether an absolute value of the first upper-limit input power Win1 is less than an absolute value of the second upper-limit output power Wout2.

When determined that the absolute value of the first upper-limit input power Win1 is less than the absolute value of the second upper-limit output power Wout2, the EVECU 100 proceed to step S42. At step S42, the EVECU 100 applies a condition that the discharging power of the first storage battery 31 is equal to or less than the first upper-limit output power Wout1, and the discharging power of the second storage battery 32 is equal to or less than the second upper-limit output power Wout2, and calculates the first command discharging current Idis2 to be greater than the second command discharging current Idis1. According to the present embodiment, the first command discharging current Idis1 corresponds to a "supply-destination command discharging current".

Over-charging as a result of the external power supply control suddenly stopping occurs in the first storage battery 31 rather than the second storage battery 32. To prevent the occurrence of over-charging of the first storage battery 31, the first upper-limit input power Win1 of the first storage battery 31 is required to be increased as quickly as possible. In light of this point, the process at step S42 in which discharging of the first storage battery 31 is prioritized over the second storage battery 32 is provided. According to the present embodiment, the EVECU 100 calculates the first command discharging current Idis1 based on the first upper-limit output power Wout1 and the first detection voltage VH. Specifically, for example, the first command discharging current Idis1 may be Wout1/VH. In addition, the EVECU 100 sets the second command discharging current Idis2 to 0.

When determined that the absolute value of the first upper-limit input power Win1 is equal to or greater than the absolute value of the second upper-limit output power Wout2, at step S43, the EVECU 100 calculates the difference ΔSOC in charging rate and determines whether the calculated difference ΔSOC in charging rate is greater than the determination threshold Sth. The difference ΔSOC in charging rate is a value obtained by subtracting the SOC1 of the unit battery configuring the first storage battery 31 from the SOC2 of the unit battery configuring the second storage battery 32.

When determined that the difference ΔSOC in charging rate is greater than the determination threshold Sth, the EVECU 100 proceed to step S44. At step S44, the EVECU 100 applies a condition that the discharging power of the first storage battery 31 is equal to or less than the first upper-limit output power Wout1, and the discharging power of the second storage battery 32 is equal to or less than the second upper-limit output power Wout2, and calculates the second command discharging current Idis2 to be greater than the first command discharging current Idis1. As a result, the discharging power of the second storage battery 32 is greater than the discharging power of the first storage battery 31. The process at step S44 is a process for suppressing increase in the difference between the SOC of each unit battery configuring the first storage battery 31 and the SOC of each unit battery configuring the second storage battery 32. According to the present embodiment, the EVECU 100 calculates the second command discharging current Idis2 based on the second upper-limit output power Wout2 and the second detection voltage VL. Specifically, for example, the second command discharging current Idis2 may be Wout2/VL.

When determined that the difference ΔSOC in charging rate is equal to or less than the determination threshold Sth, at step S45, the EVECU 100 applies a condition that the discharging power of the first storage battery 31 is equal to or less than the first upper-limit output power Wout1, and the discharging power of the second storage battery 32 is equal to or less than the second upper-limit output power Wout2, and calculates the first command charging current Ich1 and the second command charging current Ich2 to be the same value. As a result, the difference between the SOC of each unit battery configuring the first storage battery 31 and the SOC of each unit battery configuring the second storage battery 32 is kept from becoming large.

After the process at step S42, S44 or S45, returning to the description for Fig. 15 above, at step S32, the EVECU 100 calculates the external command discharging current Idist by adding the first command discharging current Idis1 and the second command discharging current Idis2 calculated by the process in Fig. 16. At step S33, the EVECU 100 transmits the external command discharging current Idist to the low-voltage power supply target 230. At step S34, the second command discharging current Idis2 calculated by the process in Fig. 16 is used for step-up control of the inverter 20.

According to the present embodiment described above, risk of overcharging the first storage battery 31 as a result of the external power supply control suddenly stopping can be suppressed.

### <Variation examples according to the fourth embodiment>

At step S42 in Fig.16, the second command discharging current Idis2 may be set to a value greater than 0.

### <Fifth embodiment>

A fifth embodiment will be described below with reference to the drawings, mainly focusing on differences from the above-described embodiments. According to the present embodiment, the EVECU 100 performs power transmission control (specifically, equalization control, for example) in which power is transmitted from either of the first storage battery 31 and the second storage battery 32 to the other by performing switching control of the inverter 20.

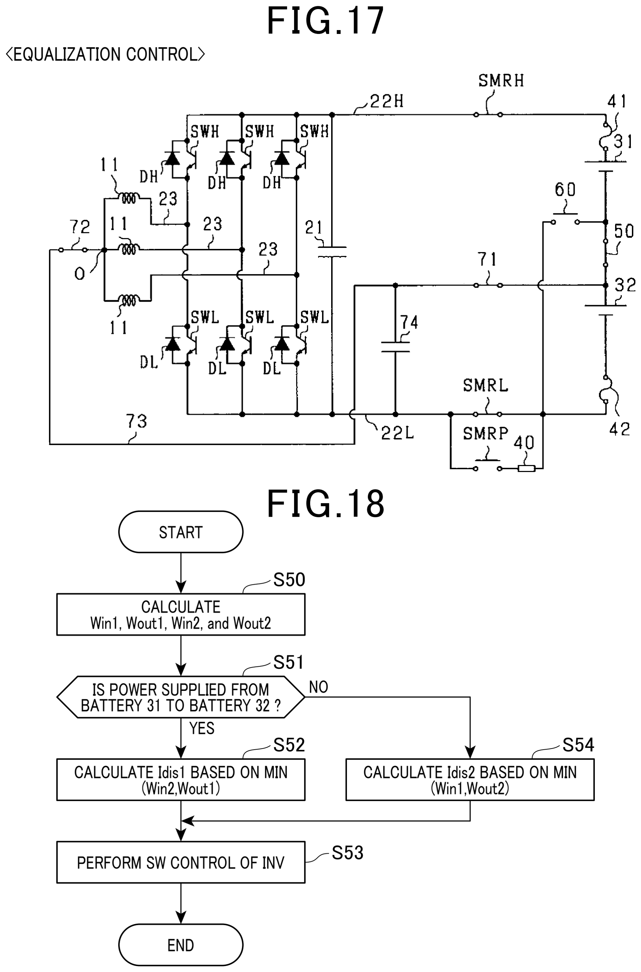

Fig. 17 shows a control state of each switch during equalization control. Here, during the equalization control, the connection switches DCRH and DCRL are controlled to be off.

The EVECU 100 turns on the high-potential-side main switch SMRH, the low-potential-side main switch SMRL, the inter-battery switch 50, the first motor-side switch 71, and the second motor-side switch 72, and turns off the pre-charge main switch SMRP and the bypass switch 60. In addition, the EVECU 100 performs switching control of at least one phase of the inverter 20 to transmit power from either of the first storage battery 31 and the second storage battery 32 to the other.

Specifically, the EVECU 100 performs first control in which a current is supplied from the first storage battery 31 to the second storage battery 32 through the inverter 20, the armature winding 11, and the connection path 73 by performing step-down control of at least one phase. In addition, the EVECU 100 performs second control in which a current is supplied to the first storage battery 31 through the second storage battery 32, the connection path 73, the armature winding 11, and the inverter 20 by performing step-up control of at least one phase.

As a result of equalization control, for example, the SOC of each unit battery configuring the first storage battery 31 and the SOC of each unit battery configuring the second storage battery 32 can be made equivalent.

Fig. 18 is a flowchart illustrating steps in an equalization control process. This process may be repeatedly performed at a predetermined control cycle, for example, through cooperation between the EVECU 100 and the battery ECU 90.

At step S50, the battery ECU 90 calculates the first upper-limit input power Win1, the first upper-limit output power Wout1, the second upper-limit input power Win2, and the second upper-limit output power Wout2, and transmits the first upper-limit input power Win1, the first upper-limit output power Wout1, the second upper-limit input power Win2, and the second upper-limit output power Wout2 to the EVECU 100.

At step S51, the EVECU 100 determines which of the first control and the second control is being performed, the first control being that in which power is supplied from the first storage battery 31 that is the "supply-source power storage unit" to the second storage battery 32 that is the "supply-destination power storage unit", and the second control being that in which power is supplied from the second storage battery 32 that is the "supply-source power storage unit" to the first storage battery 31 that is the "supply-destination power storage unit".

When determined that the first control is being performed, the EVECU 100 proceeds to step S52. At step S52, the EVECU 100 calculates the first command discharging current Idis1 based on the second upper-limit input power Win2, the first upper-limit output power Wout1, and the first detection voltage VH. Specifically, first, the EVECU 100 selects, between the second upper-limit input power Win2 (corresponding to the "upper-limit input value") and the first upper-limit output power Wout1 (corresponding to the "upper-limit output value"), that having a smaller absolute value as a first reference power Wstd1. The EVECU 100 calculates a value obtained by dividing the selected reference power Wstd1 by the first detection voltage VH (= Wstd1/VH) or a value less than this divided value as the first command discharging current Idis1.

At step S53, the EVECU 100 performs step-down control of the inverter 20 to control the current flowing to the first storage battery 31 (such as the detection current of the first current sensor 81) to the calculated first command discharging current Idis1. As a result, power can be supplied from the first storage battery 31 to the second storage battery 32 while suppressing the discharging power of the first storage battery 31 from exceeding the first upper-limit output power Wout1, and the occurrence of over-discharge of the first storage battery 31 can be suppressed.

Meanwhile, when determined that the second control is being performed, the EVECU 100 proceed to step S54. At step S54, the EVECU 100 calculates the second command discharging current Idis2 based on the first upper-limit input power Win1, the second upper-limit output power Wout2, and the second detection voltage VL. Specifically, first, the EVECU 100 selects, between the first upper-limit input power Win1 (corresponding to the "upper-limit input value") and the second upper-limit output power Wout2 (corresponding to the "upper-limit output value"), that having a smaller absolute value as a second reference power Wstd2. The EVECU 100 calculates a value obtained by dividing the selected reference power Wstd2 by the second detection voltage VL (= Wstd2/VL) or a value less than this divided value as the second command discharging current Idis2.

At step S53, the EVECU 100 performs step-down control of the inverter 20 to control the current flowing to the second storage battery 32 (such as the detection current of the second current sensor 82) to the calculated second command discharging current Idis2. As a result, power can be supplied from the second storage battery 32 to the first storage battery 31 while suppressing the discharging power of the second storage battery 32 from exceeding the second upper-limit output power Wout2, and the occurrence of over-discharge of the second storage battery 32 can be suppressed.

Here, according to the present embodiment, the processes at steps S52 and S54 correspond to the "command value calculation unit", and the process at step S53 corresponds to the "circuit control unit".

### <Sixth embodiment>

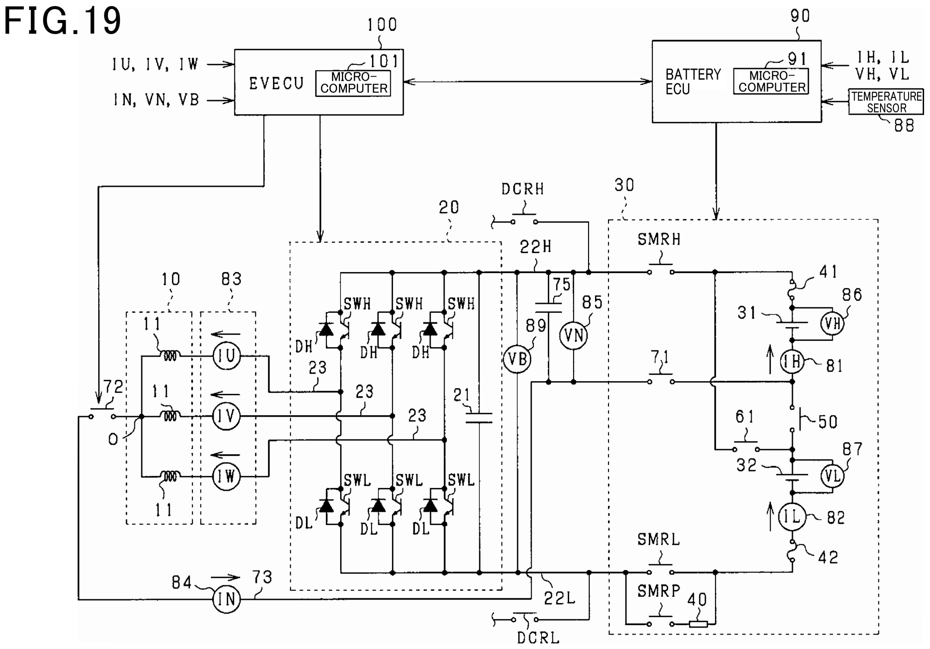

A sixth embodiment will be described below with reference to the drawings, mainly focusing on differences from the first embodiment. According to the present embodiment, as shown in Fig. 19, the connection path 73 electrically connects the neutral point O of the armature windings 11 and the negative electrode terminal of the first storage battery 31. In addition, a bypass switch 61 connects the positive electrode terminal of the second storage battery 32 and the high-potential-side path 22H. The first end of the neutral point capacitor 75 is connected to a portion of the connection path 73 between the first motor-side switch 71 and the second motor-side switch 72. The second end of the neutral point capacitor 75 is connected to a portion of the high-potential-side path 22H further toward the inverter 20 side than the high-potential-side main switch SMRH.

According to the present embodiment, the inter-terminal voltage (such as the rated voltage) of the first storage battery 31 is lower than the inter-terminal voltage (such as the rated voltage) of the second storage battery 32.

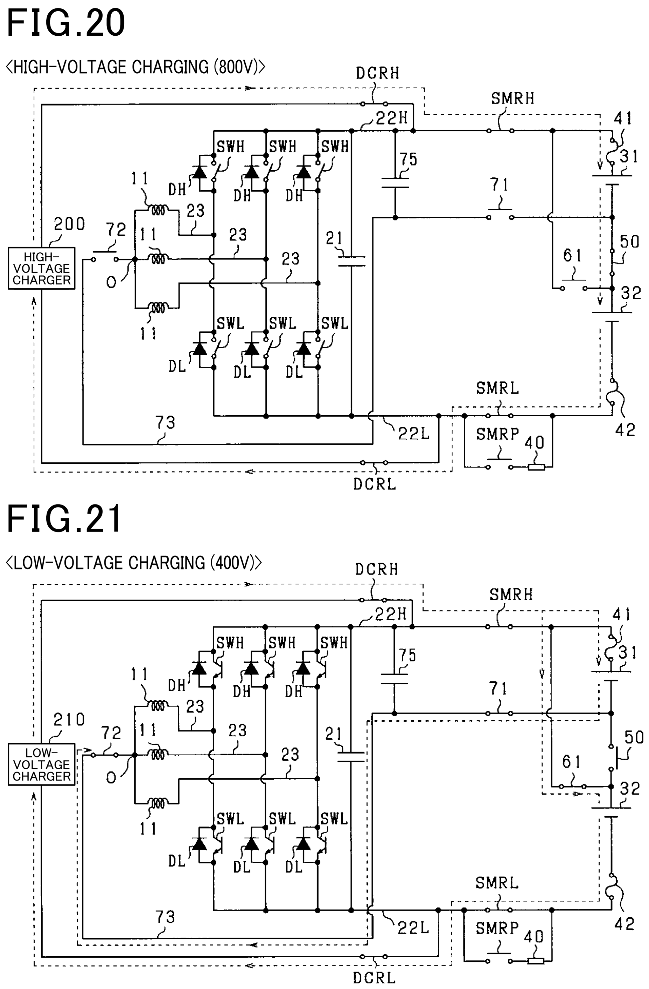

Next, external charging control according to the present embodiment will be described. Fig. 20 shows a control state of each switch during the external charging control using the high-voltage charger 200. When determined that the external charger connected to the power conversion apparatus is the high-voltage charger 200, the EVECU 100 turns off the pre-charge main switch SMRP, the bypass switch 61, the first motor-side switch 71, the second motor-side switch 72, and the upper and lower arm switches SWH and SWL of all phases of inverter 20, and turns on the high-potential-side main switch SMRH, the low-potential-side main switch SMRL, and the inter-battery switch 50. As a result, the first storage battery 31 and the second storage battery 32 are charged in a state of being connected in series to the high-voltage charger 200.

Fig. 21 shows a control state of each switch during the external charging control using the low-voltage charger 210. When determined that the external charger connected to the power conversion apparatus is the low-voltage charger 210, the EVECU 100 turns off the pre-charge main switch SMRP and the inter-battery switch 50, and turns on the high-potential-side main switch SMRH, the low-potential-side main switch SMRL, the bypass switch 61, the first motor-side switch 71, and the second motor-side switch 72. As a result, the second storage battery 32 is charged.

In the external charging control by the low-voltage charger 210, the EVECU 100 steps down the output voltage of the low-voltage charger 210 and supplies the output voltage to the first storage battery 31 by performing switching control in which the upper and lower arm switches SWH of at least a single phase are alternately turned on, or switching control of the lower arm switch SWL of at least a single phase in a state in which the upper arm switches SWH of all phases of the inverter 20 are in the off state. Specifically, the EVECU 100 performs step-down control that is the above-described switching control for controlling the neutral-point capacitor voltage VN to a target charging voltage. As a result, the first storage battery 31 is charged. The inter-terminal voltage of the first storage battery 31 is lower than the inter-terminal voltage of the second storage battery 32. Therefore, the target charging voltage of the first storage battery 31 is lower than the target charging voltage of the second storage battery 32.

Here, according to the present embodiment, the second storage battery 32 corresponds to the "supply-source power storage unit" and the first storage battery 31 corresponds to the "supply-destination power storage unit".

Incidentally, during the external charging control by the low-voltage charger 210, the external charging control may suddenly stop for some reason. In this case, the current continues to flow from the second storage battery 32 to the first storage battery 31 until the switching control of the inverter 20 is stopped. As a result, discharging power of the second storage battery 32 increases. Over-discharge of the second storage battery 32 may occur, and the second storage battery 32 may become faulty. Therefore, according to the present embodiment, the charging current of the first storage battery 31 is set so that the over-discharge of the second storage battery 32 does not occur.

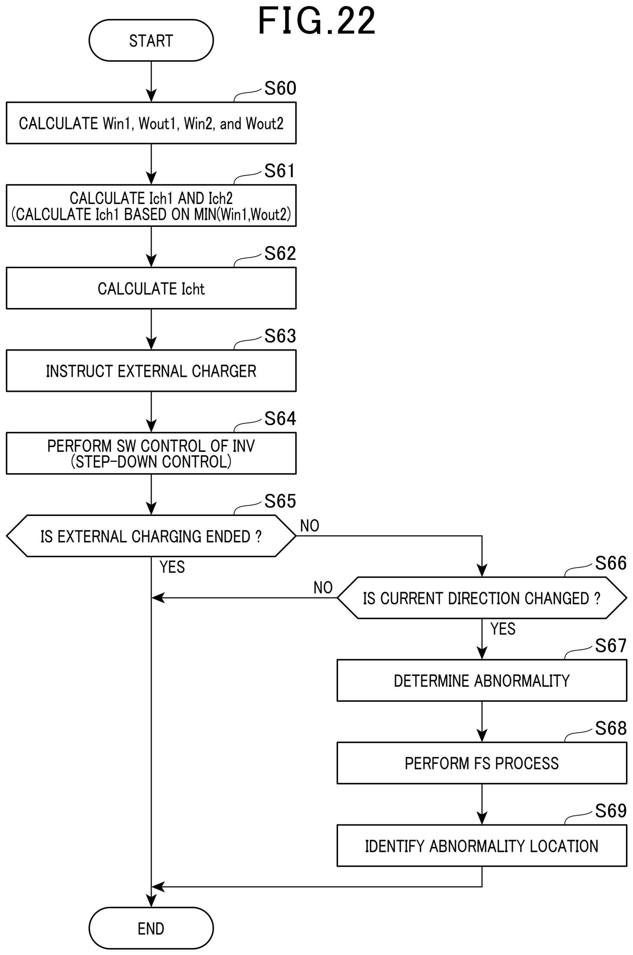

Fig. 22 is a flowchart illustrating steps in an external charging control process of the low-voltage charger 210. This process may be repeatedly performed at a predetermined control cycle, for example, through cooperation between the EVECU 100 and the battery ECU 90.

At step S60, the battery ECU 90 calculates the first upper-limit input power Win1, the first upper-limit output power Wout1, the second upper-limit input power Win2, and the second upper-limit output power Wout2 and transmits the first upper-limit input power Win1, the first upper-limit output power Wout1, the second upper-limit input power Win2, and the second upper-limit output power Wout2 to the EVECU 100.

At step S61, the EVECU 100 calculates the first command charging current Ich1 and the second command charging current Ich2. According to the present embodiment, the process at step S61 corresponds to the "command value calculation unit".

Specifically, the EVECU 100 calculates the second command charging current Ich2 based on the second upper-limit input power Win2 and the second detection voltage VL. More specifically, the second command charging current Ich2 is Win2/VL.

The EVECU 100 calculates the first command charging current Ich1 based on the second upper-limit output power Wout2, in addition to the first upper-limit input power Win1 and the first detection voltage VH. According to the present embodiment, the first command charging current Ich1 corresponds to the "supply-destination command charging current". Specifically, first, the EVECU 100 selects, between the first upper-limit input power Win1 (corresponding to the "upper-limit input value") and the second upper-limit output power Wout2 (corresponding to the "upper-limit output value"), that having a smaller absolute value as reference power Wstd. The EVECU 100 calculates a value obtained by dividing the selected reference power Wstd by the first detection voltage VH as the first command charging current Ich1 (= Wstd/VH).

At step S62, the EVECU 100 calculates the external command charging current Icht based on the first and second command charging currents Ich1 and Ich2, and the first and second detection voltages VH and VL. Specifically, first, the EVECU 100 calculates a second command conversion current Ichc2 based on the first command charging current Ich1, and the first and second detection voltages VH and VL. Specifically, the EVECU 100 calculates the second command conversion current Ichc2 based on Ichc2 = Ich1×VH/VL. The EVECU 100 calculates a value obtained by adding the second command charging current Ich2 to the calculated second command conversion current Ich2 as the external command charging current Icht. Here, according to the present embodiment, the process at step S62 corresponds to the "external command value calculation unit".

At step S63, the EVECU 100 transmits the calculated external command charging current Icht to the low-voltage charger 210.

At step S64, the EVECU 100 performs step-down control of the inverter 20 to control the charging current of the first storage battery 31 to the first command charging current Ich1. Specifically, for example, the EVECU 100 may perform step-down control of the inverter 20 to control the detection current of the first current sensor 81 or the motor current IN to the first command charging current Ich1. According to the present embodiment, the process at step S64 corresponds to the "circuit control unit".

At step S65, the EVECU 100 determines whether the external charging control has ended. When determined that the external charging control has not ended, at step S66, the EVECU 100 determines whether a direction of the current flowing to the second storage battery 32 is a direction for charging the second storage battery 32. This determination process is a process for determining whether the external charging control has suddenly stopped. For example, the EVECU 100 may determine the direction of the current flowing to the second storage battery 32 based on the detection current of the second current sensor 82.

When determined that the direction of current flowing to the second storage battery 32 is the direction for charging the second storage battery 32, the EVECU 100 continues the external charging control. Meanwhile, when determined that the direction of the current flowing to the second storage battery 32 is the direction for discharging from the second storage battery 32, at step S67, the EVECU 100 determines that an abnormality in which the external charging control is suddenly stopped has occurred. Then, at steps S68 and 69, the EVECU 100 performs a fail-safe process and an identification process for a fault location in a manner similar to that at steps S18 and S19 of Fig. 5 according to the first embodiment. Here, according to the present embodiment, the processes at steps S66 to S69 correspond to the "abnormality processing unit".

According to the embodiment described above, occurrence of over-discharge of the second storage battery 32 can be suppressed even if the external charging control is suddenly stopped.

### <Variation examples according to the sixth embodiment>

At step S68 in Fig. 22, the EVECU 100 may stop the step-down control of the inverter 20 after switching the high-potential-side main switch SMRH and the low-potential-side main switch SMRL to off. As a result, discharge of the second storage battery 32 can be promptly stopped.

The first command charging current Ich1 may be calculated as a value less than Wstd/VH. In addition, the second command charging current Ich2 may be calculated as a value less than Win2/VL.

### <Seventh embodiment>

A seventh embodiment will be described below with reference to the drawings, mainly focusing on differences from the sixth embodiment. According to the present embodiment, a distribution proportion of the output current of the low-voltage charger 210 to the first and second storage batteries 31 and 32 is adjusted based on the second upper-limit output power Wout2 of the second storage battery 32, the first upper-limit input power Win1 of the first storage battery 31, and the SOC of the first and second storage batteries 31 and 32.

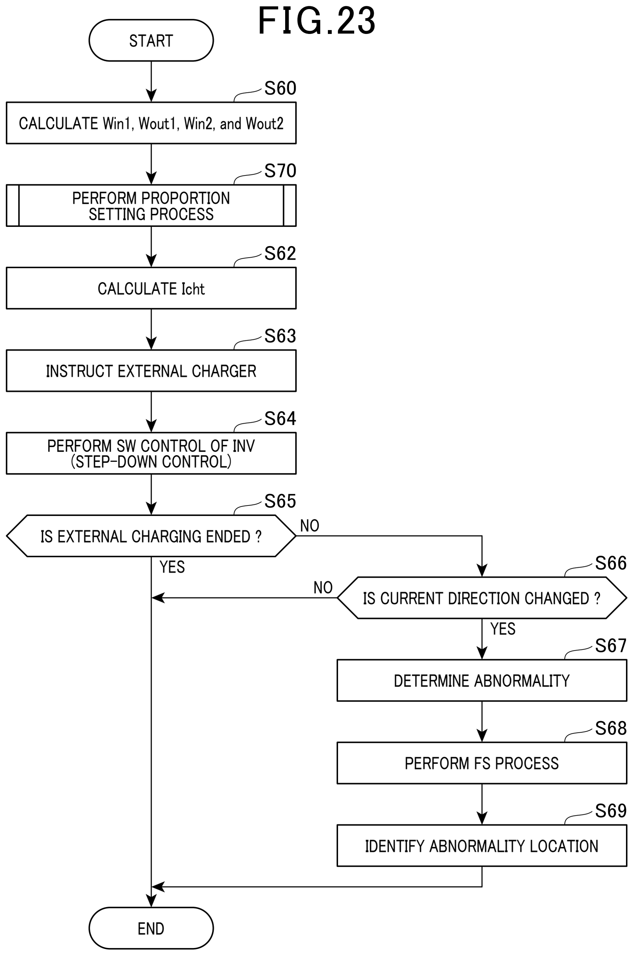

Fig. 23 is a flowchart illustrating steps in an external charging control process of the low-voltage charger 210. This process may be repeatedly performed at a predetermined control cycle, for example, through cooperation between the EVECU 100 and the battery ECU 90.

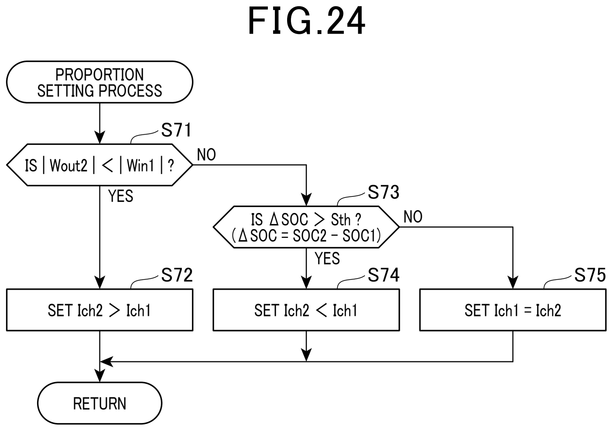

After step S60, at step S70, the EVECU 100 performs a proportion setting process. Fig. 24 is a flowchart illustrating steps in the proportion setting process. Here, according to the present embodiment, the process at step S70 corresponds to the "command value calculation unit".

At step S71, the EVECU 100 determines whether an absolute value of the second upper-limit output power Wout2 is less than an absolute value of the first upper-limit input power Win1.

When determined that the absolute value of the second upper-limit output power Wout2 is less than the absolute value of the first upper-limit input power Win1, the EVECU 100 proceeds to step S72. At step S72, the EVECU 100 applies a condition that the charging power of the first storage battery 31 is equal to or less than the first upper-limit input power Win1, and the charging power of the second storage battery 32 is equal to or less than the second upper-limit input power Win2, and calculates the second command charging current Ich2 to be greater than the first command charging current Ich1. As a result, the charging power of the second storage battery 32 is greater than the charging power of the first storage battery 31. According to the present embodiment, the second command charging current Ich2 corresponds to the "supply-source command charging current".

Over-discharge as a result of the external charging control suddenly stopping occurs in the second storage battery 32 rather than the first storage battery 31. To prevent the occurrence of over-discharge in the second storage battery 32, the second upper-limit output power Wout2 of the second storage battery 32 is required to be increased as quickly as possible. In light of this point, the process at step S72 in which charging of the second storage battery 32 is prioritized over the first storage battery 31 is provided. According to the present embodiment, the EVECU 100 calculates the second command charging current Ich2 based on the second upper-limit input power Win2 and the second detection voltage VL. Specifically, for example, the second command charging current Ich2 may be Win2/VL. In addition, the EVECU 100 sets the first command charging current Ich1 to 0.

When determined that the absolute value of the second upper-limit output power Wout2 is equal to or greater than the absolute value of the first upper-limit input power Win2, at step S73, the EVECU 100 calculates the difference ΔSOC in charging rate and determines whether the calculated difference ΔSOC in charging rate is greater than the determination threshold Sth. The difference ΔSOC in charging rate is a value obtained by subtracting the SOC1 of the unit battery configuring the first storage battery 31 from the SOC2 of the unit battery configuring the second storage battery 32.

When determined that the difference ΔSOC in charging rate is greater than the determination threshold Sth, the EVECU 100 proceed to step S74. At step S74, the EVECU 100 applies a condition that the charging power of the first storage battery 31 is equal to or less than the first upper-limit input power Win1, and the charging power of the second storage battery 32 is equal to or less than the second upper-limit input power Win2, and calculates the first command charging current Ich1 to be greater than the second command charging current Ich2. As a result, the charging power of the first storage battery 31 is greater than the charging power of the second storage battery 32. The process at step S74 is a process provided for a similar purpose as the process at step S24 according to the first embodiment. According to the present embodiment, the EVECU 100 calculates the first command charging current Ich1 based on the first upper-limit input power Win1 and the first detection voltage VH. Specifically, for example, the first command charging current Ich1 may be Win1/VH.

When determined that the difference ΔSOC in charging rate is equal to or less than the determination threshold Sth, at step S75, the EVECU 100 applies a condition that the charging power of the first storage battery 31 is equal to or less than the first upper-limit input power Win1, and the charging power of the second storage battery 32 is equal to or less than the second upper-limit input power Win2, and calculates the first command charging current Ich1 and the second command charging current Ich2 to be the same value. As a result, the difference between the SOC of each unit battery configuring the first storage battery 31 and the SOC of each unit battery configuring the second storage battery 32 is kept from becoming large.

After the process at step S72, S74 or S75, returning to the description for Fig. 23, above, at step S62, the EVECU 100 calculates the external command charging current Icht by adding the first command charging current Ich1 and the second command charging current Ich2 calculated by the process in Fig. 24. At step S63, the EVECU 100 transmits the external command charging current Icht to the low-voltage charger 210. At step S64, the first command charging current Ich1 calculated by the process in Fig. 24 is used for step-down control of the inverter 20.

According to the present embodiment described above, charging periods of the first and second storage batteries 31 and 32 can be shortened while suppressing risk of overdischarging the second storage battery 32 as a result of the external charging control suddenly stopping.

### <Variation examples according to the seventh embodiment>

At step S72 in Fig. 24, the first command charging current Ich1 may be set to a value greater than 0.

### <Eighth embodiment>

An eighth embodiment will be described below with reference to the drawings, mainly focusing on differences from the sixth embodiment. According to the present embodiment, occurrence of over-charging of the second storage battery 32 as a result of the external power supply control suddenly stopping during the external power supply control is suppressed.

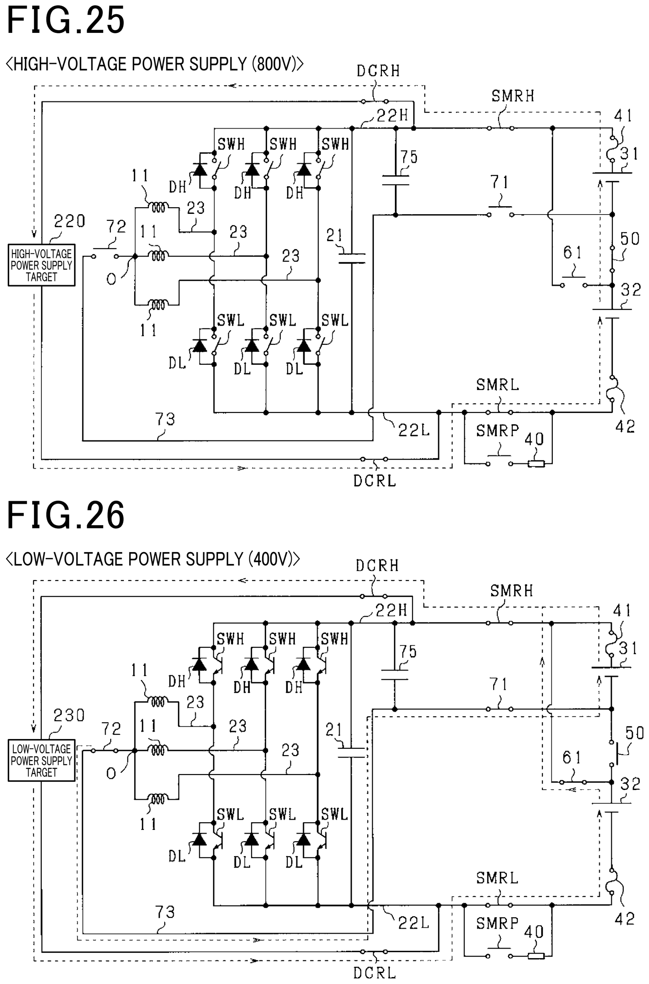

Fig. 25 shows a control state of each switch during external power supply control in which power is supplied to the high-voltage power supply target 220 from the first and second storage batteries 31 and 32. When determined that the power supply target connected to the power conversion apparatus is the high-voltage power supply target 220, the EVECU 100 turns off the pre-charge main switch SMRP, the bypass switch 61, the first motor-side switch 71, the second motor-side switch 72, and the upper and lower arm switches SWH and SWL of all phases of the inverter 20, and turns on the connection switches DCRH and DCRL, the high-potential-side main switch SMRH, the low-potential-side main switch SMRL, and the inter-battery switch 50. As a result, power is supplied to the high-voltage power supply target 220 from the first storage battery 31 and the second storage battery 32.

Fig. 26 shows a control state of each switch during external power supply control in which power is supplied to the low-voltage power supply target 230 from the first and second storage batteries 31 and 32. When determined that the power supply target connected to the power conversion apparatus is the low-voltage power supply target 220, the EVECU 100 turns off the pre-charge main switch SMRP and the inter-battery switch 50, and turns on the connection switches DCRH and DCRL, the high-potential-side main switch SMRH, the low-potential-side main switch SMRL, the bypass switch 61, the first motor-side switch 71, and the second motor-side switch 72. As a result, power is supplied to the low-voltage power supply target 230 from the second storage battery 32.

In the external power supply control for the low-voltage power supply target 230, the EVECU 100 steps up the output voltage of the first storage battery 31 and supplies the output voltage to the low-voltage power supply target 230 by performing switching control in which the upper and lower arm switches SWH and SWL of at least a single phase are alternately turned on, or switching control of the upper arm switch SWH of at least a single phase in a state in which the lower arm switches SWL of all phases of the inverter 20 are in the off state. Specifically, the EVECU 100 performs step-up control that is the above-described switching control for controlling the neutral-point capacitor voltage VN to a target power supply voltage. As a result, power is supplied to the low-voltage power supply target 230 from the first storage battery 31.

Here, according to the present embodiment, the first storage battery 31 corresponds to the "supply-source power storage unit". The second storage battery 32 corresponds to the "supply-destination power storage unit".

Incidentally, during the external power supply control for the low-voltage power supply target 230, the external power supply control may suddenly stop for some reason. In this case, the current continues to be output from the first storage battery 31 to the second storage battery 32 through the inverter 20 until the switching control of the inverter 20 is stopped. As a result, over-charging of the second storage battery 32 may occur and the second storage battery 32 may become faulty. Therefore, according to the present embodiment, the discharging current of the first storage battery 31 is set so that the overcharging of the second storage battery 32 does not occur.

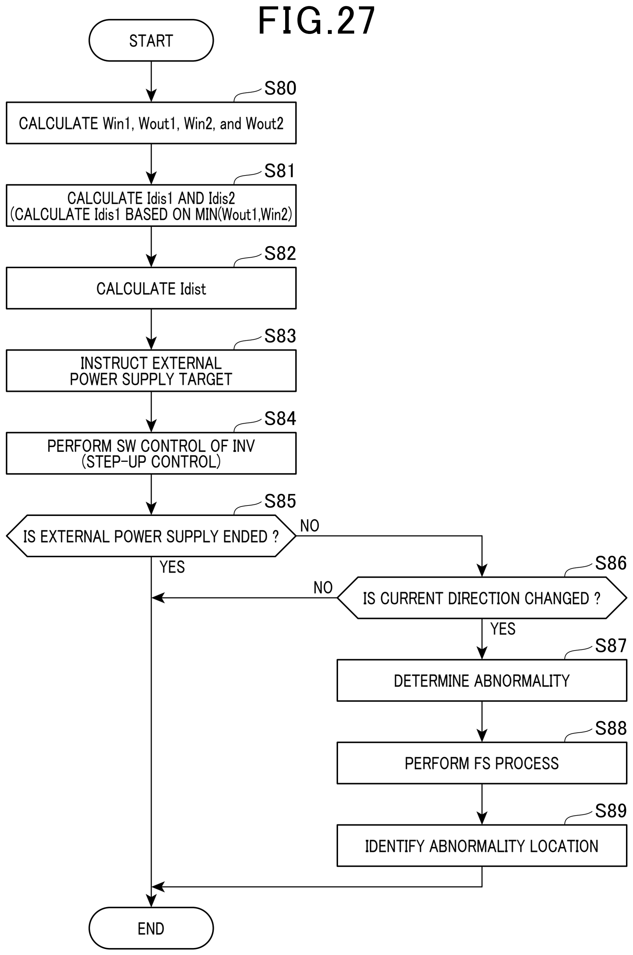

Fig. 27 is a flowchart illustrating steps in an external power supply control process for the low-voltage power supply target 230. This process may be repeatedly performed at a predetermined control cycle, for example, through cooperation between the EVECU 100 and the battery ECU 90.

At step S80, the battery ECU 90 calculates the first upper-limit input power Win1, the first upper-limit output power Wout1, the second upper-limit input power Win2, and the second upper-limit output power Wout2 and transmits the first upper-limit input power Win1, the first upper-limit output power Wout1, the second upper-limit input power Win2, and the second upper-limit output power Wout2 to the EVECU 100.

At step S81, the EVECU 100 calculates the first command discharging current Idis1 and the second command discharging current Idis2. According to the present embodiment, the process at step S81 corresponds to the "command value calculation unit".

The EVECU 100 calculates the second command discharging current Idis2 based on the second upper-limit output power Wout2 and the second detection voltage VL. According to the present embodiment, the EVECU 100 calculates a value obtained by dividing the second upper-limit output power Wout2 by the second detection voltage VL as the second command discharging current Idis2 (= Wout2/VL).

The EVECU 100 calculates the first command discharging current Idis1 based on the second upper-limit input power Win2, in addition to the first upper-limit output power Wout1 and the first detection voltage VH. Specifically, first, the EVECU 100 selects, between the first upper-limit output power Wout1 (corresponding to the "upper-limit output value") and the second upper-limit input power Win2 (corresponding to the "upper-limit input value"), that having a smaller absolute value as reference power Wstd. The EVECU 100 calculates a value obtained by dividing the selected reference power Wstd by the first detection voltage VH as the first command discharging current Idis1 (= Wstd/VH). According to the present embodiment, the first command discharging current Idis1 corresponds to the "supply-source command discharging current".

At step S82, the EVECU 100 calculates the external command discharging current Idist based on the first and second command discharging currents Idis1 and Idis2, and the first and second detection voltages VH and VL. According to the present embodiment, the process at step S82 corresponds to the "external command value calculation unit".

Specifically, first, the EVECU 100 calculates a second command conversion current Idisc2 based on the first command discharging current Idis1, and the first and second detection voltages VH and VL. Specifically, the EVECU 100 calculates the second command conversion current Idisc2 based on Idisc2 = Idis1×VH/VL. The EVECU 100 calculates a value obtained by adding the second command discharging current Idis2 to the calculated second command conversion current Idis2 as the external command discharging current Idist.

At step S83, the EVECU 100 transmits the calculated external command discharging current Idist to the low-voltage power supply target 230.

At step S84, the EVECU 100 performs step-up control of the inverter 20 to control the current flowing to the first storage battery 31 (such as the detection current of the first current sensor 81) to the calculated first command discharging current Idis1. According to the present embodiment, the process at step S84 corresponds to the "circuit control unit".

At step S85, the EVECU 100 determines whether the external power supply control has ended. When determined that the external power supply control has not ended, at step S86, the EVECU 100 determines whether a direction of the current flowing to the second storage battery 32 is a direction for discharging from the second storage battery 32. This determination process is a process for determining whether the external power supply control has suddenly stopped. For example, the EVECU 100 may determine the direction of the current flowing to the second storage battery 32 based on the detection current of the second current sensor 82.

When determined that the direction of current flowing to the second storage battery 32 is the direction for discharging from the second storage battery 32, the EVECU 100 continues the external power supply control. Meanwhile, when determined that the direction of the current flowing to the second storage battery 32 is the direction for charging the second storage battery 32, at step S87, the EVECU 100 determines that an abnormality in which the external power supply control is suddenly stopped has occurred. Then, at steps S88 and 89, the EVECU 100 performs a fail-safe process and an identification process for a fault location in a manner similar to that at steps S38 and S39 of Fig. 14 according to the third embodiment. Here, according to the present embodiment, the processes at steps S86 to S89 correspond to the "abnormality processing unit."

According to the embodiment described above, the occurrence of overcharging of the second storage battery 32 can be suppressed even if the external power supply control is suddenly stopped.

### <Variation examples according to the eighth embodiment>

At step S88 in Fig. 27, the EVECU 100 may stop the step-up control of the inverter 20 after switching the high-potential-side main switch SMRH and the low-potential-side main switch SMRL to off. As a result, charging of the second storage battery 32 can be promptly stopped.

The first command discharging current Idis1 may be calculated as a value less than Wstd/VH. In addition, the second command discharging current Idis2 may be calculated as a value less than Wout2/VL.

### <Ninth embodiment>

A ninth embodiment will be described below with reference to the drawings, mainly focusing on differences from the eighth embodiment. According to the present embodiment, a distribution proportion of the current supplied from the first and second storage batteries 31 and 32 to the low-voltage power supply target 230 is adjusted.

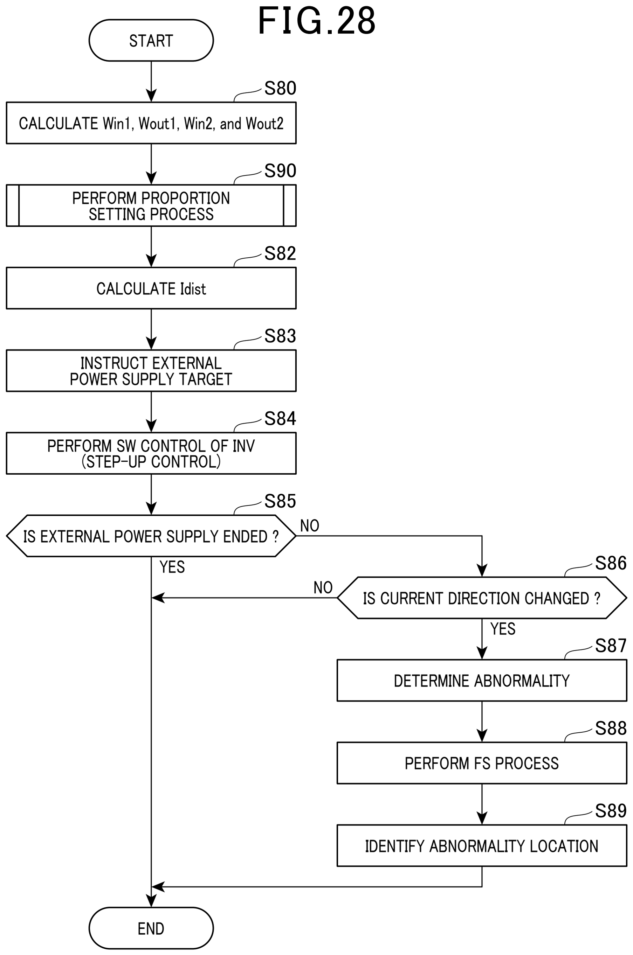

Fig. 28 is a flowchart illustrating steps in an external power supply control process for the low-voltage power supply target 230. This process may be repeatedly performed at a predetermined control cycle, for example, through cooperation between the EVECU 100 and the battery ECU 90.

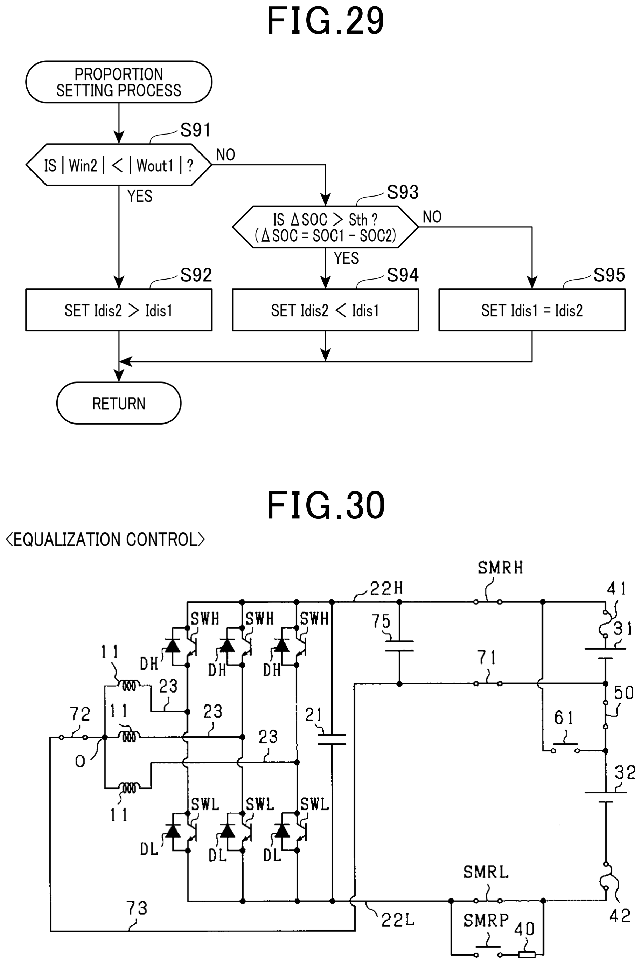

After step S80, at step S90, the EVECU 100 performs a proportion setting process. Fig. 29 is a flowchart illustrating steps in the proportion setting process. Here, according to the present embodiment, the process at step S90 corresponds to the "command value calculation unit".

At step S91, the EVECU 100 determines whether an absolute value of the second upper-limit input power Win2 is less than an absolute value of the first upper-limit output power Wout1.

When determined that the absolute value of the second upper-limit input power Win2 is less than an absolute value of the first upper-limit output power Wout1, the EVECU 100 proceed to step S92. At step S92, the EVECU 100 applies a condition that the discharging power of the first storage battery 31 is equal to or less than the first upper-limit output power Wout1, and the discharging power of the second storage battery 32 is equal to or less than the second upper-limit output power Wout2, and calculates the second command discharging current Idis2 to be greater than the first command discharging current Idis1. According to the present embodiment, the second command discharging current Idis2 corresponds to the "supply-destination command discharging current".

Over-charging as a result of the external power supply control suddenly stopping occurs in the second storage battery 32 rather than the first storage battery 31. To prevent the occurrence of over-charging of the second storage battery 32, the second upper-limit input power Win2 of the second storage battery 32 is required to be increased as quickly as possible. In light of this point, the process at step S92 in which discharging of the second storage battery 32 is prioritized over the first storage battery 31 is provided. According to the present embodiment, the EVECU 100 calculates the second command discharging current Idis2 based on the second upper-limit output power Wout2 and the second detection voltage VL. Specifically, for example, the second command discharging current Idis2 may be Wout2/VL. In addition, the EVECU 100 sets the first command discharging current Idis1 to 0.

When determined that the absolute value of the second upper-limit input power Win2 is equal to or greater than the absolute value of the first upper-limit output power Wout2, at step S93, the EVECU 100 calculates a difference ΔSOC in charging rate and determines whether the calculated difference ΔSOC in charging rate is greater than the determination threshold Sth. The difference ΔSOC in charging rate is a value obtained by subtracting the SOC2 of the unit battery configuring the second storage battery 32 from the SOC 1 of the unit battery configuring the first storage battery 31.

When determined that the difference ΔSOC in charging rate is greater than the determination threshold Sth, the EVECU 100 proceeds to step S94. At step S94, the EVECU 100 applies a condition that the discharging power of the first storage battery 31 is equal to or less than the first upper-limit output power Wout1, and the discharging power of the second storage battery 32 is equal to or less than the second upper-limit output power Wout2, and calculates the first command discharging current Idis1 to be greater than the second command discharging current Idis2. As a result, the discharging power of the first storage battery 31 is greater than the discharging power of the second storage battery 32. The process at step S94 is a process provided for a similar purpose as the process at step S44 in Fig. 16 according to the fourth embodiment. According to the present embodiment, the EVECU 100 calculates the first command discharging current Idis1 based on the first upper-limit output power Wout1 and the first detection voltage VH. Specifically, for example, the first command discharging current Idis1 may be Wout1/VH.

When determined that the difference ΔSOC in charging rate is equal to or less than the determination threshold Sth, at step S95, the EVECU 100 applies a condition that the discharging power of the first storage battery 31 is equal to or less than the first upper-limit output power Wout1, and the discharging power of the second storage battery 32 is equal to or less than the second upper-limit output power Wout2, and calculates the first command charging current Ich1 and the second command charging current Ich2 to be the same value. As a result, the difference between the SOC of each unit battery configuring the first storage battery 31 and the SOC of each unit battery configuring the second storage battery 32 is kept from becoming large.

After the process at step S92, S94 or S95, returning to the description for Fig. 28 above, at step S82, the EVECU 100 calculates the external command discharging current Idist by adding the first command discharging current Idis1 and the second command discharging current Idis2 calculated by the process in Fig. 29. At step S83, the EVECU 100 transmits the external command discharging current Idist to the low-voltage power supply target 230. At step S84, the first command discharging current Idis1 calculated by the process in Fig. 29 is used for step-up control of the inverter 20.

According to the present embodiment described above, risk of overcharging the first storage battery 31 as a result of the external power supply control suddenly stopping can be suppressed

### <Variation examples according to the ninth embodiment>

At step S92 in Fig.29, the first command discharging current Idis1 may be set to a value greater than 0.

### <Tenth embodiment>

A tenth embodiment will be described below with reference to the drawings, mainly focusing on differences from the sixth to ninth embodiments. According to the present embodiment, the EVECU 100 performs power transmission control (specifically, equalization control, for example) in which power is transmitted from either of the first storage battery 31 and the second storage battery 32 to the other by performing switching control of the inverter 20.

Fig. 30 shows a control state of each switch during equalization control. Here, during the equalization control, the connection switches DCRH and DCRL are controlled to be off.

The EVECU 100 turns on the high-potential-side main switch SMRH, the low-potential-side main switch SMRL, the inter-battery switch 50, the first motor-side switch 71 and the second motor-side switch 72, and turns off the pre-charge main switch SMRP and the bypass switch 61. In addition, the EVECU 100 performs switching control of at least one phase of the inverter 20 to transmit power from either of the first storage battery 31 and the second storage battery 32 to the other.

Specifically, the EVECU 100 performs first control in which a current is supplied from the second storage battery 32 to the first storage battery 31 by performing step-down control of at least one phase. In addition, the EVECU 100 performs second control in which a current is supplied from the first storage battery 31 to the second storage battery 32 by performing step-up control of at least one phase.

As a result of equalization control, for example, the SOC of each unit battery configuring the first storage battery 31 and the SOC of each unit battery configuring the second storage battery 32 can be made equivalent.

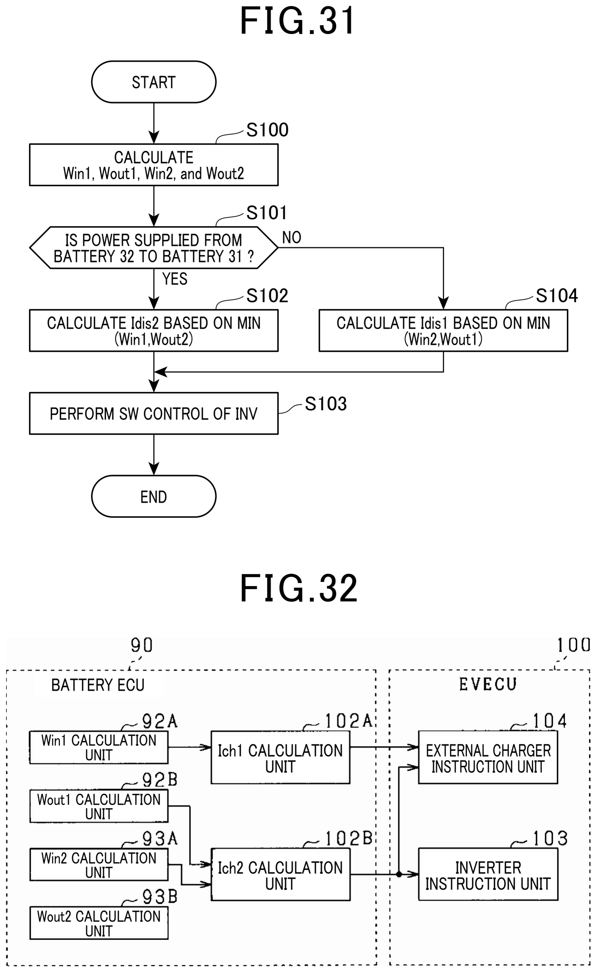

Fig. 31 is a flowchart illustrating steps in an equalization control process. This process is repeatedly performed at a predetermined control cycle, for example, through cooperation between the EVECU 100 and the battery ECU 90.

At step S100, the battery ECU 90 calculates the first upper-limit input power Win1, the first upper-limit output power Woutl, the second upper-limit input power Win2, and the second upper-limit output power Wout2 and transmits the first upper-limit input power Win1, the first upper-limit output power Wout1, the second upper-limit input power Win2, and the second upper-limit output power Wout2 to the EVECU 100.

At step S100, the battery ECU 90 calculates the first upper-limit input power Win1, the first upper-limit output power Wout1, the second upper-limit input power Win2, and the second upper-limit output power Wout2 and transmits the first upper-limit input power Win1, the first upper-limit output power Wout1, the second upper-limit input power Win2, and the second upper-limit output power Wout2 to the EVECU 100.

At step S101, the EVECU 100 determines which of the first control and the second control is performed, the first control being that in which power is supplied from the second storage battery 32 that is the "supply-source power storage unit" to the first storage battery 31 that is the "supply-destination power storage unit", and the second control being that in which power is supplied from the first storage battery 31 that is the "supply-source power storage unit" to the second storage battery 32 that is the "supply-destination power storage unit".

When determined that the first control is performed, the EVECU 100 proceeds to step S102. At step S102, the EVECU 100 calculates the second command discharging current Idis2 based on the first upper-limit input power Win1, the second upper-limit output power Wout2, and the second detection voltage VL. Specifically, first, the EVECU 100 selects, between the first upper-limit input power Win1 (corresponding to the "upper-limit input value") and the second upper-limit output power Wout2 (corresponding to the "upper-limit output value"), that having a smaller absolute value as a second reference power Wstd2. The EVECU 100 calculates a value obtained by dividing the selected reference power Wstd2 by the second detection voltage VL (= Wstd2/VL) or a value less than this divided value as the second command discharging current Idis2.

At step S103, the EVECU 100 performs step-down control of the inverter 20 to control the current flowing to the second storage battery 32 (such as the detection current of the second current sensor 82) to the calculated second command discharging current Idis2. As a result, power can be supplied from the second storage battery 32 to the first storage battery 31 while suppressing the discharging power of the second storage battery 32 from exceeding the second upper-limit output power Wout2, and the occurrence of over-discharge of the second storage battery 32 can be suppressed.

Meanwhile, when determined that the second control is performed, the EVECU 100 proceeds to step S104. At step S104, the EVECU 100 calculates the first command discharging current Idis1 based on the second upper-limit input power Win2, the first upper-limit output power Wout1, and the first detection voltage VH. Specifically, first, the EVECU 100 selects, between the second upper-limit input power Win2 (corresponding to the "upper-limit input value") and the first upper-limit output power Wout1 (corresponding to the "upper-limit output value"), that having a smaller absolute value as a first reference power Wstd1. The EVECU 100 calculates a value obtained by dividing the selected reference power Wstd1 by the first detection voltage VH (= Wstd1/VH) or a value less than this divided value as the first command discharging current Idis1.

At step S103, the EVECU 100 performs step-up control of the inverter 20 to control the current flowing to the first storage battery 31 (such as the detection current of the first current sensor 81) to the calculated first command discharging current Idis1. As a result, power can be supplied from the first storage battery 31 to the second storage battery 32 while suppressing the discharging power of the first storage battery 31 from exceeding the first upper-limit output power Wout1, and the occurrence of over-discharge of the first storage battery 31 can be suppressed.

Here, according to the present embodiment, the processes at steps S102 and S104 correspond to the "command value calculation unit", and the process at step S103 corresponds to the "circuit control unit".

### <Other embodiments>

Here, the above-described embodiments may be modified in the following manner.

A configuration in which some of the functions provided by the EVECU 100 are provided in the battery ECU 90 without being provided in the EVECU 100 is also possible. For example, as shown in Fig. 32, the first charging current calculation unit 102A and the second charging current calculation unit 102B may be provided in the battery ECU 90.

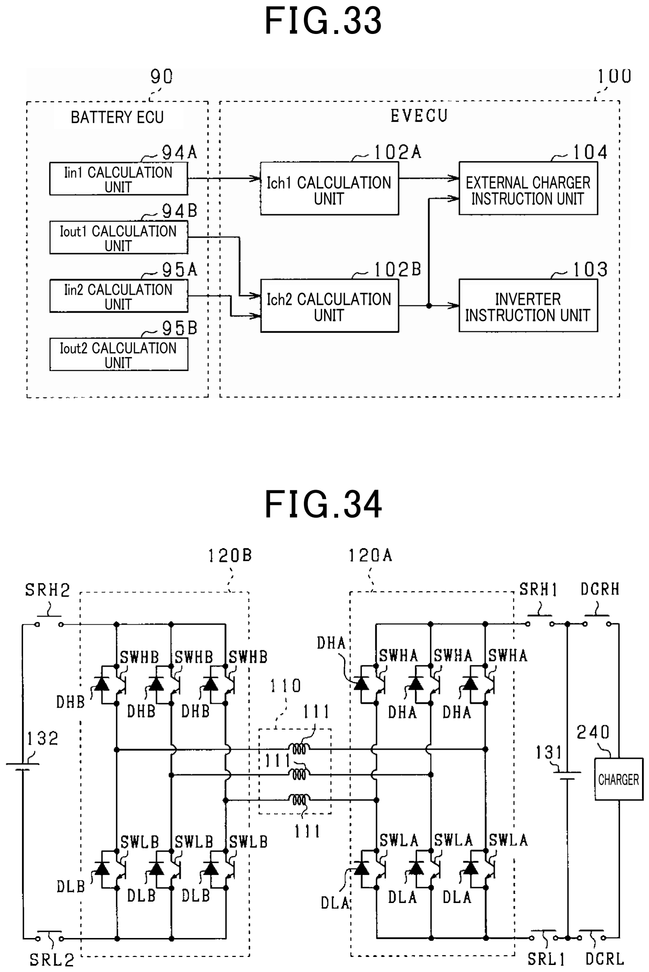

The upper-limit output value and the upper-limit input value calculated by the battery ECU 90 are not limited to upper-limit power and may be upper-limit current. Fig. 33 is a functional block diagram illustrating the battery ECU 90 and the EVECU 100.

The battery ECU 90 includes a first input current calculation unit 94A, a first output current calculation unit 94B, a second input current calculation unit 95A, and a second output current calculation unit 95B.

The first input current calculation unit 94A calculates a first upper-limit input current Iin1 that is a maximum value of the current that can be input to the first storage battery 31, based on the battery state of the first storage battery 31. For example, the first input current calculation unit 94A may calculate the first upper-limit input current Iin1 to decrease as the SOC of the first storage battery 31 increases or the temperature of the first storage battery 31 detected by the temperature sensor 88 decreases.

The first output current calculation unit 94B calculates a first upper-limit output current Iout1 that is a maximum value of the current that can be output from the first storage battery 31, based on the battery state of the first storage battery 31. For example, the first output current calculation unit 94B may calculate the first upper-limit output current Iout1 to increase as the SOC of the first storage battery 31 increases or the temperature of the first storage battery 31 detected by the temperature sensor 88 increases.

The second input current calculation unit 95A calculates a second upper-limit input current Iin2 that is a maximum value of the current that can be input to the second storage battery 32, based on the battery state of the second storage battery 32. For example, the second input current calculation unit 95A may calculate the second upper-limit input current Iin2 to decrease as the SOC of the second storage battery 321 increases or the temperature of the second storage battery 32 detected by the temperature sensor 88 decreases.

The second output current calculation unit 9BB calculates a second upper-limit output current Iout2 that is a maximum value of the current that can be output from the second storage battery 32, based on the battery state of the second storage battery 32. For example, the second output current calculation unit 95B may calculate the second upper-limit output current Iout2 to increase as the SOC of the second storage battery 32 increases or the temperature of the second storage battery 32 detected by the temperature sensor 88 increases.

According to the above-described embodiments, the first upper-limit input current Iin1, the first upper-limit output current Iout1, the second upper-limit input current Iin2 and the second upper-limit output current Iout2 may be used instead of the first upper-limit input power Win1, the first upper-limit output power Wout1, the second upper-limit input power Win2 and the second upper-limit output power Wout2.

When described according to the first embodiment as an example, the first charging current calculation unit 102A may calculate the calculated first upper-limit input current Iin1 or a value less than the first upper-limit input current Iin1 as the first command charging current Ich1.

In addition, the second charging current calculation unit 102B may calculate a reference current that is a value having a smaller absolute value between the calculated second upper-limit input current Iin2 and first upper-limit output value Iout1, or a value less than the reference current as the second command charging current Ich2.

According to the above-described embodiments, either of the first and second motor-side switches 71 and 72 may not be provided in the power conversion apparatus. In addition, both the first and second motor-side switches 71 and 72 may not be provided in the power conversion apparatus.

The switch in the inverter 20 is not limited to the IGBT and, for example, may be an N-channel metal-oxide-semiconductor field-effect transistor (MOSFET) including a body diode. In this case, a high-potential-side terminal of the N-channel MOSFET is a drain and a low-potential-side terminal is a source.

The high-potential-side main switch SMRH may not be provided.

The series connection body composed of the pre-charge main switch SMRP and the pre-charge resistor 40 may be connected in parallel to the high-potential-side main switch SMRH, instead of the low-potential-side main switch SMRL. In addition, in this case, the low-potential-side main switch SMRL may not be provided.

The fuses 41 and 42 may not be provided.

The motor is not limited to that having the star connection and may have a Δ connection. In addition, the motor and the inverter are not limited to those having three phases, and may have two phases, or four or more phases. Furthermore, the motor is not limited to the permanent-magnet-type synchronous motor having a permanent magnet in the rotor as a field pole and may be a field-winding-type synchronous motor having a field winding in the rotor as the field pole. In this case, the rotor may include both the field winding and the permanent magnet. Moreover, the motor is not limited to being a synchronous motor and may be an induction motor.

The system including the power conversion apparatus is not limited to the system shown in Fig. 1 and Fig. 19 and, for example, may be systems shown in Fig. 34 to Fig. 36. Here, the pre-charge main switch, the pre-charge resistor, control apparatuses, and the like are omitted in Fig. 34 to Fig. 36.

Fig. 34 shows a system including two storage batteries and two inverters. The system includes a first storage battery 131 and a second storage battery 132, and a first inverter 120A and a second inverter 120B configuring the power conversion apparatus. The first storage battery 131 is an assembled battery similar to the first storage battery 31 in Fig. 1 and the like. The second storage battery 132 is an assembled battery similar to the second storage battery 32 in Fig. 1 and the like. A positive electrode terminal of an external charger 240 is electrically connected to a positive electrode terminal of the first storage battery 131 with the high-potential-side connection switch DCRH therebetween. A negative electrode terminal of the external charger 240 is electrically connected to a negative electrode terminal of the first storage battery 131 with the low-potential-side connection switch DCRL therebetween.

The first inverter 120A includes a series connection body composed of a first upper arm switch SWHA and a second lower arm switch SWLA for each of the three phases. A first upper arm diode DHA that is a freewheeling diode is connected in reverse parallel to the first upper arm switch SWHA. A first lower arm diode DLA that is a freewheeling diode is connected in reverse parallel to the first lower arm switch SWLA. According to the present embodiment, the switches SWHA and SWLA are IGBT. The second inverter 120B also includes a second upper arm switch SWHB, a second lower arm switch SWLB, a second upper arm diode DHB and a second lower arm diode DLB, in a manner similar to the first inverter 120A.

The power conversion apparatus includes a motor 110. The motor 110 includes armature windings 111 for the three phases. In each phase, a connection point between an emitter that is a low-potential-side terminal of the first upper arm switch SWHA and a collector that is a high-potential-side terminal of the first lower arm switch SWLA is connected to a connection point between the emitter of the second upper arm switch SWHB and the collector of the second lower arm switch SWLB, with the armature windings 111 therebetween.

The positive electrode terminal of the first storage battery 131 is connected to the collector of the first upper arm switch SWHA of each phase with a first high-potential-side main switch SRH1 therebetween. The negative electrode terminal of the first storage battery 131 is connected to the emitter of the first lower arm switch SWLA of each phase with a first low-potential-side main switch SRL1 therebetween. The positive electrode terminal of the second storage battery 132 is connected to the collector of the second upper arm switch SWHB of each phase with a second high-potential-side main switch SRH2 therebetween. The negative electrode terminal of the second storage battery 132 is connected to the emitter of the second lower arm switch SWLB of each phase with a second low-potential-side main switch SRL2 therebetween.

In the external charging control using the external charger 240, a control apparatus (not shown) of the power conversion apparatus, while charging the first storage battery 131 from the external charger 240 in a state in which the switches DCRH, DCRL, SRH1, SRL1, SRH2, and SRL2 are turned on, also charges the second storage battery 132 from the external charger 240 through the inverters 120A and 120B by performing switching control of the switches in the first inverter 120A and switching control of the switches in the second inverter 120B. In this case, over-discharge of the second storage battery 132 may occur if the external charging control suddenly stops. Therefore, the control apparatus may perform processes similar to the processes described with reference to Fig. 5 according to the first embodiment or Figs. 8 and 9 according to the second embodiment to suppress the occurrence of over-discharge.

Here, in external power supply control in which an external power supply target that is a grid power supply or an electrical load is electrically connected to the first storage battery 131 instead of the external charger 240, power is supplied to the external power supply target from the second storage battery 132, through the inverters 120A and 120B by switching control of the inverters 120A and 120B. In this case, over-charging of the first storage battery 131 may occur if the external power supply control suddenly stops. Therefore, the control apparatus may perform processes similar to the processes described with reference to Fig. 14 according to the third embodiment or Figs. 15 and 16 according to the fourth embodiment to suppress the occurrence of over-charging.

In addition, in a case in which power transmission control (specifically, equalization control, for example) in which power is supplied from either of the first storage battery 131 and the second storage battery 132 to the other by switching control of the inverters 120A and 120B is performed, the control apparatus may perform processes similar to that in Fig. 18 according to the fifth embodiment.

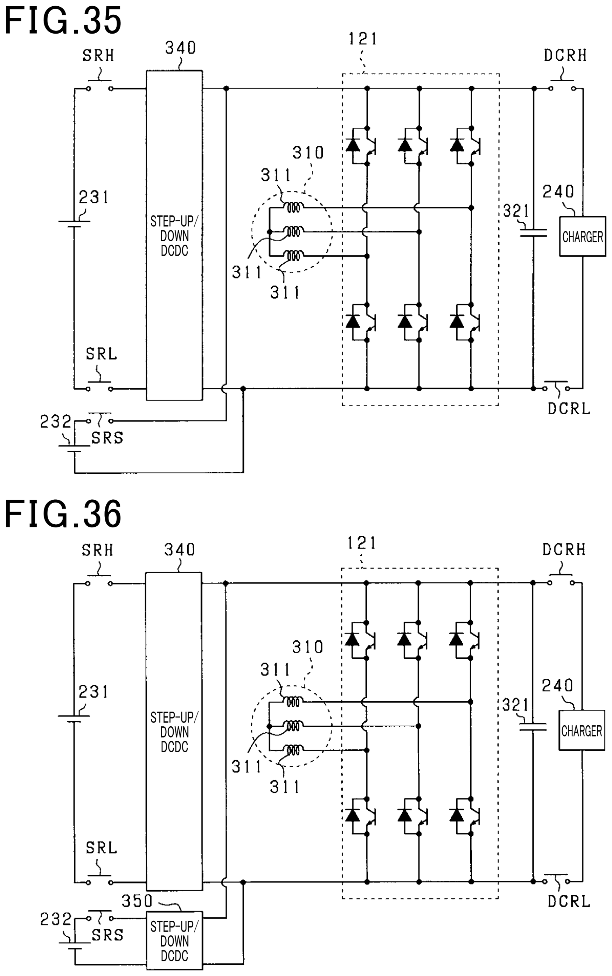

Fig. 35 shows a system including two storage batteries and a single inverter. The system includes a first storage battery 231 and a second storage battery 232, an inverter 121 configuring the power conversion apparatus, a motor 310, and a direct current-to-direct current (DCDC) converter 340. The first storage battery 231 is an assembled battery similar to the first storage battery 31 in Fig. 1 and the like. The second storage battery 232 is an assembled battery similar to the second storage battery 32 in Fig. 1 and the like. The positive electrode terminal of the external charger 240 is electrically connected to a positive electrode terminal of the first storage battery 231 with the high-potential-side connection switch DCRH therebetween. The negative electrode terminal of the external charger 240 is electrically connected to a negative electrode terminal of the first storage battery 231 with the low-potential-side connection switch DCRL therebetween. The motor 310 includes armature windings 311 for the three phases and a smoothing capacitor 321.

The DCDC converter 340 and the first storage battery 231 are connected with the high-potential-side main switch SRH and the low-potential-side main switch SRL therebetween. The DCDC converter 340 provides a step-up function for stepping up a direct-current output voltage of the first storage battery 231 and outputting the direct-current output voltage to the inverter 121 side, and a step-down function for stepping down a direct-current input voltage from the inverter 121 side and outputting the direct-current input voltage to the first storage battery 231. The smoothing capacitor 321 and the second storage battery 232 are connected with a main switch SRS therebetween.

In external charging control using the external charger 240, a control apparatus (not shown) of the power conversion apparatus, while charging the first storage battery 231 from the external charger 240 in a state in which the switches DCRH, DCRL, SRH, SRL, and SRS are turned on, also charges the second storage battery 232 from the external charger 240 by performing switching control of the DCDC converter 340. In this case, over-discharge of the second storage battery 232 may occur if the external charging control suddenly stops. Therefore, the control unit may perform processes similar to the processes described with reference to Fig. 5 according to the first embodiment or Figs. 8 and 9 according to the second embodiment to suppress the occurrence of over-discharge. Here, the case shown in Fig. 34 also similarly applies to external power supply control and equalization control.

Fig. 36 shows a system including two storage batteries and a single inverter. In the configuration shown in Fig. 36, the DCDC converter 340 is referred to as a first DCDC converter 340. The system includes a second DCDC converter 350 provided between the smoothing capacitor 321 and the second storage battery 232. The second DCDC converter 350 provides a step-up function for stepping up a direct-current output voltage of the second storage battery 232 and outputting the direct-current output voltage to the inverter 121 side, and a step-down function for stepping down a direct-current input voltage from the inverter 121 side and outputting the direct-current input voltage to the second storage battery 232.

In the external charging control using the external charger 240, a control apparatus (not shown) of the power conversion apparatus, while charging the second storage battery 232 from the external charger 240 by switching control of the second DCDC converter 350 in a state in which the switches DCRH, DCRL, SRH, SRL, and SRS are turned on, also charges the first storage battery 231 from the external charger 240 through the first DCDC converter 340 by switching control of the first DCDC converter 340. Over-discharge of the second storage battery 232 may occur if the external charging control suddenly stops in a case in which transmitted power from the first DCDC converter 340 to the first storage battery 231 is greater than the transmitted power from the second DCDC converter 350 to the second storage battery 232. Meanwhile, over-discharge of the first storage battery 231 may occur if the external charging control suddenly stops in a case in which the transmitted power from the second DCDC converter 350 to the second storage battery 232 is greater than the transmitted power from the first DCDC converter 340 to the first storage battery 231. In such cases, processes similar to those described for the configuration in Fig. 35 may be performed to suppress the occurrence of over-discharge. In addition, processes similar to those described for the configuration in Fig. 35 may be performed in external power supply control and equalization control, as well.

The control apparatus performing external charging, power supply control, and equalization control is not limited to the battery ECU 90 and the EVECU 100. For example, each control may be performed by the battery ECU 90, the EVECU 100, and a control apparatus other than the battery ECU 90 and the EVECU 100 working in cooperation. Alternatively, each control may be performed by a plurality of control apparatuses other than the battery ECU 90 and the EVECU 100 working in cooperation. Alternatively, each control may be performed by a single control apparatus (such as the EVECU 100).

The power storage unit to be charged by the external charger is not limited to the storage battery and, for example, may be one include a large-capacity electric double-layer capacitor, or both the storage battery and the electric double-layer capacitor.

A moving body in which the power conversion apparatus is mounted is not limited to a vehicle and, for example, may be an aircraft or a ship. In addition, the power conversion apparatus is not limited to being mounted in the moving body and may be a stationary apparatus.

The control apparatus and the method thereof described in the present disclosure may be actualized by a dedicated computer that is provided such as to be configured by a processor and a memory, the processor being programmed to provide one or a plurality of functions that are realized by a computer program. Alternatively, the control apparatus and the method thereof described in the present disclosure may be actualized by a dedicated computer that is provided by a processor being configured by a single dedicated hardware logic circuit or more. Still alternatively, the control apparatus and the method thereof described in the present disclosure may be actualized by a single dedicated computer or more. The dedicated computer may be configured by a combination of a processor that is programmed to provide one or a plurality of functions, a memory, and a processor that is configured by a single hardware logic circuit or more. In addition, the computer program may be stored in a nontransitory, tangible recording medium that can be read by a computer as instructions performed by the computer.

Characteristic configurations extracted from the embodiments described above are described below.

### [Configuration 1]

A power conversion apparatus applicable to a system including a first power storage unit (31, 131, 231) and a second power storage unit (32, 132, 232), the power conversion apparatus including: a transformer circuit (11, 20, 73, 111, 120A, 120B, 240) that transforms a direct-current output voltage of a supply-source power storage unit that is either of the first power storage unit and the second power storage unit, and supplies the transformed direct-current voltage to a supply-destination power storage unit that is the other power storage unit; a command value calculation unit that calculates a command value (Ich1, Ich2, Idis1, Idis2) of a current flowing to at least either of the supply-source power storage unit and the supply-destination power storage unit; and a circuit control unit that performs switching control of the transformer circuit based on the calculated command value, in which the command value calculation unit calculates the command value based on an upper-limit output value that is either of an upper-limit output power and an upper-limit output current of the supply-source power storage unit, and an upper-limit input value that is either of an upper-limit input power and an upper-limit output current of the supply-destination power storage unit.

### [Configuration 2]

The power conversion apparatus according to the configuration 1, in which: the supply-source power storage unit is a power storage unit that is electrically connected to an external charger (210, 240); the command value is a supply-destination command charging current (Ich1, Ich2) that is a command value of a charging current supplied to the supply-destination power storage unit from the transformer circuit; the command value calculation unit calculates the supply-destination command charging current based on the upper-limit output value and the upper-limit input value in external charging control in which a charging current output from the external charger is supplied to the supply-destination power storage unit; and the circuit control unit performs switching control of the transformer circuit to control the charging current of the supply-destination power storage unit to the supply-destination command charging current.

### [Configuration 3]

The power conversion apparatus according to the configuration 2, in which: the command value calculation unit calculates the supply-destination command charging current based on a value that is smaller between an absolute value of the upper-limit output value and an absolute value of the upper-limit input value.

### [Configuration 4]

The power conversion apparatus according to the configuration 2, in which: the command value calculation unit sets a supply-source command charging current that is a command value of a charging current of the supply-source power storage unit to be greater than the supply-destination command charging current in response to an absolute value of the upper-limit output value being less than an absolute value of the upper-limit input value.

### [Configuration 5]

The power conversion apparatus according to the configuration 4, in which: the command value calculation unit sets the supply-source command charging current to be smaller than the supply-destination command charging current in response to the absolute value of the upper-limit output value being equal to or greater than the absolute value of the upper-limit input value, and a state-of-charge of the supply-source power storage unit being greater than a state-of-charge of the supply-destination power storage unit by more than a threshold (Sth).

### [Configuration 6]

The power conversion apparatus according to the configuration 4 or 5, further including: an external command value calculation unit that calculates a command value (Icht) of the charging current output from the external charger based on the supply-source command charging current, the supply-destination command charging current, the voltage of the supply-source power storage unit, and the voltage of the supply-destination power storage unit.

### [Configuration 7]

The power conversion apparatus according to any one of the configurations 2 to 6, further including: an abnormality processing unit that determines whether a direction of a current flowing to the supply-source power storage unit changes from a charging direction of the supply-source power storage unit to a discharging direction of the supply-source power storage unit during execution of the external charging control, in which the abnormality processing unit determines that an abnormality in the external charging control has occurred in response to it being determined that the direction of the current flowing to the supply-source power storage unit has changed to the discharging direction.

### [Configuration 8]

The power conversion apparatus according to the configuration 7, in which: the abnormality processing unit determines that an abnormality has occurred in an electrical path from the supply-source power storage unit to the external charger as the abnormality in the external charging control.

### [Configuration 9]

The power conversion apparatus according to the configuration 7 or 8, in which: the abnormality processing unit stops the switching control of the transformer circuit in response to it being determined that an abnormality in the external charging control has occurred.

### [Configuration 10]

The power conversion apparatus according to the configuration 1, in which: the supply-destination power storage unit is a power storage unit that is electrically connected to an external power supply target (230); the command value is a supply-source command discharging current (Idis1, Idis2) that is a command value of a discharging current supplied to the transformer circuit from the supply-source power storage unit; the command value calculation unit calculates the supply-source command discharging current based on the upper-limit output value and the upper-limit input value in external power supply control in which an output current of the supply-destination power storage unit is supplied to the external power supply target; and the circuit control unit performs switching control of the transformer circuit to control the discharging current of the supply-source power storage unit to the supply-source command discharging current.

### [Configuration 11]

The power conversion apparatus according to the configuration 10, in which: the command value calculation unit calculates the supply-source command discharging current based on a value that is smaller between an absolute value of the upper-limit output value and an absolute value of the upper-limit input value.

### [Configuration 12]

The power conversion apparatus according to the configuration 10, in which: the command value calculation unit sets a supply-destination command discharging current that is a command value of a discharging current of the supply-destination power storage unit to be greater than the supply-source command discharging current in response to an absolute value of the upper-limit output value being smaller than an absolute value of the upper-limit input value.

### [Configuration 13]

The power conversion apparatus according to the configuration 12, in which the command value calculation unit sets the supply-destination command discharging current to be smaller than the supply-source command discharging current in response to the absolute value of the upper-limit output value being equal to or greater than the absolute value of the upper-limit input value, and a state-of-charge of the supply-source power storage unit being greater than a state-of-charge of the supply-destination power storage unit by more than a threshold (Sth).

### [Configuration 14]

The power conversion apparatus according to the configuration 12 or 13, further including: an external command value calculation unit that calculates a command value (Idist) of an output current of the external power supply target based on the supply-source command discharging current, the supply-destination command discharging current, the voltage of the supply-source power storage unit, and the voltage of the supply-destination power storage unit.

### [Configuration 15]

The power conversion apparatus according to any one of the configurations 10 to 14, further including: an abnormality processing unit that determines whether a direction of a current flowing to the supply-destination power storage unit changes from a discharging direction of the supply-destination power storage unit to a charging direction of the supply-destination power storage unit during execution of the external power supply control, in which the abnormality processing unit determines that an abnormality in the external power supply control has occurred in response to it being determined that the direction of the current flowing to the supply-destination power storage unit has changed to the charging direction.

### [Configuration 16]

The power conversion apparatus according to the configuration 15, wherein: the abnormality processing unit determines that an abnormality has occurred in an electrical path from the supply-destination power storage unit to the external power supply target as the abnormality in the external power supply control.

### [Configuration 17]

The power conversion apparatus according to the configuration 15 or 16, in which: the abnormality processing unit stops the switching control of the transformer circuit in response to it being determined that an abnormality in the external power supply control has occurred.

### [Configuration 18]

The power conversion apparatus according to the configuration 1, in which: the command value calculation unit calculates a command discharging current (Idis1, Idis2) supplied from the supply-source power storage unit to the transformer circuit as the command value in switching control of the transformer circuit to supply power from the supply-source power storage unit to the supply-destination power storage unit through the transformer circuit; the circuit control unit performs switching control of the transformer circuit to control the discharging current supplied from the supply-source power storage unit to the transformer circuit to the command discharging current; and the command value calculation unit calculates the command discharging current based on a value that is smaller between an absolute value of the upper-limit output value and an absolute value of the upper-limit input value.

### [Configuration 19]

The power conversion apparatus according to any one of the configurations 1 to 5, 10 to 13, and 18, further including: an inverter (20) that has an upper arm switch (SWH) and a lower arm switch (SWL); a motor (10) that has an armature winding (11) that is electrically connected to a low-potential-side terminal of the upper arm switch and a high-potential-side terminal of the lower arm switch; a high-potential-side path (22H) that electrically connects a positive-electrode terminal of the first power storage unit (31) and a high-potential-side terminal of the upper arm switch; a low-potential path (22L) that electrically connects a negative-electrode terminal of the second power storage unit (32) and a low-potential-side terminal of the lower arm switch; a connection path (73) that electrically connects a positive-electrode terminal of the second power storage unit and the armature winding; an inter-power storage unit switch (50) that electrically connects a negative-electrode terminal of the first power storage unit and the positive-electrode terminal of the second power storage unit by being turned on, and electrically disconnects the negative-electrode terminal of the first power storage unit and the positive-electrode terminal of the second power storage unit by being turned off; and a bypass switch (60) that electrically connects the negative-electrode terminal of the first power storage unit and the negative-electrode terminal of the second power storage unit by being turned on, and electrically disconnects the negative-electrode terminal of the first power storage unit and the negative-electrode terminal of the second power storage unit by being turned off, in which the armature winding, the inverter, and the connection path configure the transformer circuit.

### [Configuration 20]

The power conversion apparatus according to any one of the configurations 1 to 5, 10 to 13, and 18, further including: an inverter (20) that has an upper arm switch (SWH) and a lower arm switch (SWL); a motor (10) that has an armature winding (11) that is electrically connected to a low-potential-side terminal of the upper arm switch and a high-potential-side terminal of the lower arm switch; a high-potential-side path (22H) that electrically connects a positive-electrode terminal of the first power storage unit (31) and a high-potential-side terminal of the upper arm switch; a low-potential path (22L) that electrically connects a negative-electrode terminal of the second power storage unit (32) and a low-potential-side terminal of the lower arm switch; a connection path (73) that electrically connects a negative-electrode terminal of the first power storage unit and the armature winding; an inter-power storage unit switch (50) that electrically connects a negative-electrode terminal of the first power storage unit and the positive-electrode terminal of the second power storage unit by being turned on, and electrically disconnects the negative-electrode terminal of the first power storage unit and the positive-electrode terminal of the second power storage unit by being turned off; and a bypass switch (61) that electrically connects the positive-electrode terminal of the first power storage unit and the positive-electrode terminal of the second power storage unit by being turned on, and electrically disconnects the positive-electrode terminal of the first power storage unit and the positive-electrode terminal of the second power storage unit by being turned off, in which the armature winding, the inverter, and the connection path configure the transformer circuit.

### [Configuration 21]

A program applicable to a system including a first power storage unit (31, 131, 231), a second power storage unit (32, 132, 232), a power conversion apparatus, and a computer (91, 101), in which: the power conversion apparatus includes a transformer circuit (11, 20, 73, 111, 120A, 120B, 240) that transforms a direct-current output voltage of a supply-source power storage unit that is either of the first power storage unit and the second power storage unit, and supplies the transformed direct-current voltage to a supply-destination power storage unit that is the other power storage unit; the program causes the computer to perform a command value calculation process for calculating a command value (Ich1, Ich2, Idis1, Idis2) of a current flowing to at least either of the supply-source power storage unit and the supply-destination power storage unit, and a circuit control process for performing switching control of the transformer circuit based on the calculated command value; and the command value calculation process is a process for calculating the command value based on an upper-limit output value that is either of an upper-limit output power or an upper-limit output current of the supply-source power storage unit, and an upper-limit input value that is either of an upper limit input power or an upper-limit output current of the supply-destination power storage unit.

While the present disclosure has been described with reference to embodiments thereof, it is to be understood that the disclosure is not limited to the embodiments and constructions. The present disclosure is intended to cover various modification examples and modifications within the range of equivalency. In addition, various combinations and configurations, and further, other combinations and configurations including more, less, or only a single element thereof are also within the spirit and scope of the present disclosure.

## Claims

1. A power conversion apparatus applicable to a system including a first power storage unit (31, 131, 231) and a second power storage unit (32, 132, 232), the power conversion apparatus comprising:
a transformer circuit (11, 20, 73, 111, 120A, 120B, 240) that transforms a direct-current output voltage of a supply-source power storage unit that is either of the first power storage unit and the second power storage unit, and supplies the transformed direct-current voltage to a supply-destination power storage unit that is the other power storage unit;
a command value calculation unit that calculates a command value (Ich1, Ich2, Idis1, Idis2) of a current flowing to at least either of the supply-source power storage unit and the supply-destination power storage unit; and
a circuit control unit that performs switching control of the transformer circuit based on the calculated command value, wherein
the command value calculation unit calculates the command value based on an upper-limit output value that is either of an upper-limit output power and an upper-limit output current of the supply-source power storage unit, and an upper-limit input value that is either of an upper-limit input power and an upper-limit output current of the supply-destination power storage unit.

2. The power conversion apparatus according to claim 1, wherein:
the supply-source power storage unit is a power storage unit that is electrically connected to an external charger (210, 240);
the command value is a supply-destination command charging current (Ich1, Ich2) that is a command value of a charging current supplied to the supply-destination power storage unit from the transformer circuit;
the command value calculation unit calculates the supply-destination command charging current based on the upper-limit output value and the upper-limit input value in external charging control in which a charging current output from the external charger is supplied to the supply-destination power storage unit; and
the circuit control unit performs switching control of the transformer circuit to control the charging current of the supply-destination power storage unit to the supply-destination command charging current.

3. The power conversion apparatus according to claim 2, wherein:
the command value calculation unit calculates the supply-destination command charging current based on a value that is smaller between an absolute value of the upper-limit output value and an absolute value of the upper-limit input value.

4. The power conversion apparatus according to claim 2, wherein:
the command value calculation unit sets a supply-source command charging current that is a command value of a charging current of the supply-source power storage unit to be greater than the supply-destination command charging current in response to an absolute value of the upper-limit output value being less than an absolute value of the upper-limit input value.

5. The power conversion apparatus according to claim 4, wherein:
the command value calculation unit sets the supply-source command charging current to be smaller than the supply-destination command charging current in response to the absolute value of the upper-limit output value being equal to or greater than the absolute value of the upper-limit input value, and a state-of-charge of the supply-source power storage unit being greater than a state-of-charge of the supply-destination power storage unit by more than a threshold (Sth).

6. The power conversion apparatus according to claim 4 or 5, further comprising:
an external command value calculation unit that calculates a command value (Icht) of the charging current output from the external charger based on the supply-source command charging current, the supply-destination command charging current, the voltage of the supply-source power storage unit, and the voltage of the supply-destination power storage unit.

7. The power conversion apparatus according to any one of claims 2 to 5, further comprising:
an abnormality processing unit that determines whether a direction of a current flowing to the supply-source power storage unit changes from a charging direction of the supply-source power storage unit to a discharging direction of the supply-source power storage unit during execution of the external charging control, wherein
the abnormality processing unit determines that an abnormality in the external charging control has occurred in response to it being determined that the direction of the current flowing to the supply-source power storage unit has changed to the discharging direction.

8. The power conversion apparatus according to claim 7, wherein:
the abnormality processing unit determines that an abnormality has occurred in an electrical path from the supply-source power storage unit to the external charger as the abnormality in the external charging control.

9. The power conversion apparatus according to claim 7, wherein:
the abnormality processing unit stops the switching control of the transformer circuit in response to it being determined that an abnormality in the external charging control has occurred.

10. The power conversion apparatus according to claim 1, wherein:
the supply-destination power storage unit is a power storage unit that is electrically connected to an external power supply target (230);
the command value is a supply-source command discharging current (Idis1, Idis2) that is a command value of a discharging current supplied to the transformer circuit from the supply-source power storage unit;
the command value calculation unit calculates the supply-source command discharging current based on the upper-limit output value and the upper-limit input value in external power supply control in which an output current of the supply-destination power storage unit is supplied to the external power supply target; and
the circuit control unit performs switching control of the transformer circuit to control the discharging current of the supply-source power storage unit to the supply-source command discharging current.

11. The power conversion apparatus according to claim 10, wherein:
the command value calculation unit calculates the supply-source command discharging current based on a value that is smaller between an absolute value of the upper-limit output value and an absolute value of the upper-limit input value.

12. The power conversion apparatus according to claim 10, wherein:
the command value calculation unit sets a supply-destination command discharging current that is a command value of a discharging current of the supply-destination power storage unit to be greater than the supply-source command discharging current in response to an absolute value of the upper-limit output value being smaller than an absolute value of the upper-limit input value.

13. The power conversion apparatus according to claim 12, wherein
the command value calculation unit sets the supply-destination command discharging current to be smaller than the supply-source command discharging current in response to the absolute value of the upper-limit output value being equal to or greater than the absolute value of the upper-limit input value, and a state-of-charge of the supply-source power storage unit being greater than a state-of-charge of the supply-destination power storage unit by more than a threshold (Sth).

14. The power conversion apparatus according to claim 12 or 13, further comprising:
an external command value calculation unit that calculates a command value (Idist) of an output current of the external power supply target based on the supply-source command discharging current, the supply-destination command discharging current, the voltage of the supply-source power storage unit, and the voltage of the supply-destination power storage unit.

15. The power conversion apparatus according to any one of claims 10 to 13, further comprising:
an abnormality processing unit that determines whether a direction of a current flowing to the supply-destination power storage unit changes from a discharging direction of the supply-destination power storage unit to a charging direction of the supply-destination power storage unit during execution of the external power supply control, wherein
the abnormality processing unit determines that an abnormality in the external power supply control has occurred in response to it being determined that the direction of the current flowing to the supply-destination power storage unit has changed to the charging direction.

16. The power conversion apparatus according to claim 15, wherein:
the abnormality processing unit determines that an abnormality has occurred in an electrical path from the supply-destination power storage unit to the external power supply target as the abnormality in the external power supply control.

17. The power conversion apparatus according to claim 15, wherein:
the abnormality processing unit stops the switching control of the transformer circuit in response to it being determined that an abnormality in the external power supply control has occurred.

18. The power conversion apparatus according to claim 1, wherein:
the command value calculation unit calculates a command discharging current (Idis1, Idis2) supplied from the supply-source power storage unit to the transformer circuit as the command value in switching control of the transformer circuit to supply power from the supply-source power storage unit to the supply-destination power storage unit through the transformer circuit;
the circuit control unit performs switching control of the transformer circuit to control the discharging current supplied from the supply-source power storage unit to the transformer circuit to the command discharging current; and
the command value calculation unit calculates the command discharging current based on a value that is smaller between an absolute value of the upper-limit output value and an absolute value of the upper-limit input value.

19. The power conversion apparatus according to any one of claims 1 to 5, 10 to 13, and 18, further comprising:
an inverter (20) that has an upper arm switch (SWH) and a lower arm switch (SWL);
a motor (10) that has an armature winding (11) that is electrically connected to a low-potential-side terminal of the upper arm switch and a high-potential-side terminal of the lower arm switch;
a high-potential-side path (22H) that electrically connects a positive-electrode terminal of the first power storage unit (31) and a high-potential-side terminal of the upper arm switch;
a low-potential path (22L) that electrically connects a negative-electrode terminal of the second power storage unit (32) and a low-potential-side terminal of the lower arm switch;
a connection path (73) that electrically connects a positive-electrode terminal of the second power storage unit and the armature winding;
an inter-power storage unit switch (50) that electrically connects a negative-electrode terminal of the first power storage unit and the positive-electrode terminal of the second power storage unit by being turned on, and electrically disconnects the negative-electrode terminal of the first power storage unit and the positive-electrode terminal of the second power storage unit by being turned off; and
a bypass switch (60) that electrically connects the negative-electrode terminal of the first power storage unit and the negative-electrode terminal of the second power storage unit by being turned on, and electrically disconnects the negative-electrode terminal of the first power storage unit and the negative-electrode terminal of the second power storage unit by being turned off, wherein
the armature winding, the inverter, and the connection path configure the transformer circuit.

20. The power conversion apparatus according to any one of claims 1 to 5, 10 to 13, and 18, further comprising:
an inverter (20) that has an upper arm switch (SWH) and a lower arm switch (SWL);
a motor (10) that has an armature winding (11) that is electrically connected to a low-potential-side terminal of the upper arm switch and a high-potential-side terminal of the lower arm switch;
a high-potential-side path (22H) that electrically connects a positive-electrode terminal of the first power storage unit (31) and a high-potential-side terminal of the upper arm switch;
a low-potential path (22L) that electrically connects a negative-electrode terminal of the second power storage unit (32) and a low-potential-side terminal of the lower arm switch;
a connection path (73) that electrically connects a negative-electrode terminal of the first power storage unit and the armature winding;
an inter-power storage unit switch (50) that electrically connects a negative-electrode terminal of the first power storage unit and the positive-electrode terminal of the second power storage unit by being turned on, and electrically disconnects the negative-electrode terminal of the first power storage unit and the positive-electrode terminal of the second power storage unit by being turned off; and
a bypass switch (61) that electrically connects the positive-electrode terminal of the first power storage unit and the positive-electrode terminal of the second power storage unit by being turned on, and electrically disconnects the positive-electrode terminal of the first power storage unit and the positive-electrode terminal of the second power storage unit by being turned off, wherein
the armature winding, the inverter, and the connection path configure the transformer circuit.

21. A program applicable to a system including a first power storage unit (31, 131, 231), a second power storage unit (32, 132, 232), a power conversion apparatus, and a computer (91, 101), wherein:
the power conversion apparatus includes a transformer circuit (11, 20, 73, 111, 120A, 120B, 240) that transforms a direct-current output voltage of a supply-source power storage unit that is either of the first power storage unit and the second power storage unit, and supplies the transformed direct-current voltage to a supply-destination power storage unit that is the other power storage unit;
the program causes the computer to perform
a command value calculation process for calculating a command value (Ich1, Ich2, Idis1, Idis2) of a current flowing to at least either of the supply-source power storage unit and the supply-destination power storage unit, and
a circuit control process for performing switching control of the transformer circuit based on the calculated command value; and
the command value calculation process is a process for calculating the command value based on an upper-limit output value that is either of an upper-limit output power or an upper-limit output current of the supply-source power storage unit, and an upper-limit input value that is either of an upper limit input power or an upper-limit output current of the supply-destination power storage unit.
